# EUROPÄISCHE PATENTSCHRIFT

(11) **EP 1 910 160 B1**
(45) Veröffentlichungstag und Bekanntmachung des Hinweises auf die Patenterteilung: **13.03.2013**
(21) Anmeldenummer: 06762986.5
(22) Anmeldetag: 04.08.2006
(51) Int. Cl.: B62K 21/26, B62J 9/00

(54) **HANDGRIFF**
HAND GRIP
POIGNEE

(30) Priorität: 05.08.2005 DE 102005039077
(43) Veröffentlichungstag der Anmeldung: 16.04.2008
(73) Patentinhaber: Gustav Magenwirth GmbH & Co. KG, 72574 Bad Urach (DE)
(72) Erfinder: SCHMAUDER, Werner, 72584 Hülben (DE); PENAZZI, Richard, 72574 Bad Urach (DE); CHERUBIN, Frank, 72574 Bad Urach (DE)
(74) Vertreter: Hoeger, Stellrecht & Partner Patentanwälte
(86) Internationale Anmeldenummer: PCT/EP2006/007728
(87) Internationale Veröffentlichungsnummer: WO 2007/017189

(56) Entgegenhaltungen:
- DE-C- 830 746
- DE-C- 847 864
- US-A1- 2004 068 844
- US-A1- 2004 129 107

## Beschreibung

Die Erfindung betrifft einen Handgriff für lenkergeführte Fahrzeuge, umfassend eine Griffhülle aus einem Griffhüllenmaterial und einen sich von mindestens einer Einstecköffnung mit seiner Längsausdehnung in einer Einsteckrichtung für ein Griffstück eines Lenkers erstreckenden Aufnahmeraum, welcher mindestens ein Wandsegment aufweist, welches mindestens eine an eine Außenfläche des Griffstücks angepasste Teilflächen aufweisende Anlagefläche umfasst.

Derartige Handgriffe sind aus der US 2004/068844 A1 bekannt. Bei diesen wird üblicherweise das Griffstück in den Handgriff gesteckt. Der Oberbegriff vom Anspruch 1 stützt sich auf US 2004/068844.

Dabei treten bei der Herstellung sowohl des Aufnahmeraums als auch bei der Herstellung des Griffstücks des Lenkers Toleranzprobleme auf, die dazu führen, dass häufig der Handgriff mit Spiel auf dem Griffstück des Lenkers sitzt.

Der Erfindung liegt daher die Aufgabe zugrunde, einen Handgriff der gattungsgemäßen Art derart zu verbessern, dass dieser optimal auf dem Griffstück des Lenkers sitzt.

Diese Aufgabe wird bei einem Handgriff der eingangs beschriebenen Art erfindungsgemäß dadurch gelöst, das Wandsegment mindestens eine zwischen den Teilflächen angeordnete, sich ungefähr parallel zu der Einsteckrichtung erstreckende Ausnehmung als Klebstoffreservoir aufweist und dass die Ausnehmung eine mit zunehmender Erstreckung derselben in der Einsteckrichtung sich verringernde Breite in Umfangsrichtung des Griffstücks aufweist.

Der Vorteil dieser Lösung ist darin zu sehen, dass mit der Ausnehmung als Klebstoffreservoir die Möglichkeit geschaffen wird, den Klebstoff beim Aufschieben des Handgriffs auf das Griffstück insbesondere durch Drehen des Handgriffs zu verteilen und so auf den Teilflächen auszubringen, dass zwischen diesen und der Außenfläche des Griffstücks eine dauerhafte und spielfreie Klebeverbindung zwischen dem Handgriff und dem Lenker realisierbar ist, wobei insbesondere auch die Klebstoffschicht zwischen den Teilflächen und der Außenfläche des Griffstücks zum Toleranzausgleich beiträgt.

Durch die sich mit zunehmender Erstreckung in der Einsteckrichtung verringernden Breite ist eine besonders vorteilhafte Verteilung des Klebstoffs über die Teilflächen realisierbar.

Ferner ist vorzugsweise zur Verbesserung der Verteilung des Klebstoffs vorgesehen, dass die Ausnehmung eine mit zunehmender Erstreckung derselben in der Einsteckrichtung sich verringernde Tiefe radial zum Griffstück aufweist.

Die Verteilung des Klebstoffs lässt sich noch weiter verbessern, dass die Ausnehmung einen sich mit zunehmender Erstreckung derselben in der Einsteckrichtung verringernden Querschnitt aufweist.

Prinzipiell könnte die Ausnehmung eine im Querschnitt ungefähr rechteckförmige oder halbkreisförmige Ausnehmung sein.

Ein stufenweiser Übergang zwischen der Ausnehmung und den Teilflächen würde jedoch eine möglichst gute Verteilung des über die Ausnehmung zur Verfügung gestellten Klebstoffs zur Ausbildung einer möglichst gleichmäßigen Klebstoffschicht negativ beeinträchtigen.

Aus diesem Grund ist vorzugsweise vorgesehen, dass die Ausnehmung stufenfrei in die sich an diese anschließende Teilfläche übergeht, insbesondere mit einer mit einem spitzen Winkel zu der sich anschließenden Teilfläche verlaufenden Seitenwand versehen ist.

Durch einen derartigen im Wesentlichen stufenfreien Übergang zwischen der Ausnehmung und der Teilfläche lässt sich der Klebstoff besonders gleichmäßig aus der Ausnehmung heraus über die Teilfläche und in den Spaltraum bewegen, insbesondere dann, wenn der Handgriff beim Aufschieben auf das Griffstück in einer Richtung oder in zueinander entgegengesetzte Richtungen hin und her gedreht wird.

Aus diesem Grund ist es besonders günstig, wenn die Ausnehmung beidseitig mit einer derart verlaufenden Seitenwand versehen ist.

Um insbesondere auch über die gesamte Längsausdehnung des Aufnahmeraums eine gleichmäßige Klebstoffverteilung zu erreichen, ist vorzugsweise vorgesehen, dass die Ausnehmung sich im Wesentlichen über die gesamte Längsausdehnung des Aufnahmeraums erstreckt.

Eine vorteilhafte erfindungsgemäße Lösung, welche zu einer sehr gleichmäßigen Verteilung des Klebstoffs führt, sieht dabei mehrere in Umfangsrichtung des Griffstücks im Abstand voneinander angeordnete Ausnehmungen vor.

Alternativ oder ergänzend zu den bislang beschriebenen Lösungen ist ein vorteilhaftes Ausführungsbeispiel so ausgebildet, dass mindestens ein Wandsegment des Aufnahmeraums mit einer an eine Außenfläche des Griffstücks angepasste Teilflächen aufweisenden Auflagefläche und einem sich über die Auflagefläche erhebenden Distanzelement versehen ist, welches zwischen den Teilflächen und einer Außenfläche des Griffstücks einen Spaltraum zur Aufnahme einer Klebstoffschicht schafft;

Der Vorteil dieser Lösung ist darin zu sehen, dass das Distanzelement die Möglichkeit eröffnet, die Höhe des Spaltraums in Grenzen vorzugeben und gleichzeitig Toleranzen auszugleichen.

Beispielsweise ist es dabei möglich, in Umfangsrichtung des Griffstücks mehrere im Abstand voneinander angeordnete Distanzelemente vorzusehen, die somit in Umfangsrichtung einen näherungsweise gleichmäßigen Spaltraum für die Ausbildung der Klebstoffschicht zur Folge haben.

Das Distanzelement könnte prinzipiell als Nocken oder Block ausgebildet sein.

Eine für die Herstellung des Distanzelements günstige Lösung sieht vor, dass das Distanzelement als sich in Einsteckrichtung erstreckender Wulst ausgebildet ist.

Besonders günstig lässt sich das Distanzelement dann herstellen, wenn dieses sich zusammenhängend von der Einstecköffnung zu einem Ende des Aufnahmeraums erstreckt.

Besonders günstig ist es, wenn das Distanzelement sich im Wesentlichen über die gesamte Längsausdehnung des Aufnahmeraums erstreckt.

Um eine möglichst gleichmäßige Verteilung des Klebstoffs zu erreichen, hat es sich als besonders günstig erwiesen, wenn zwischen dem Distanzelement und der Ausnehmung eine Teilfläche der Auflagefläche liegt, wodurch die Möglichkeit besteht, die Höhe des sich über der Teilfläche ausbildenden Spaltraums, in den die Klebstoffschicht durch Zufuhr von Klebstoff aus der Ausnehmung eindringen soll, festzulegen.

Besonders günstig ist es, wenn beiderseits der jeweiligen Ausnehmung ein Distanzelement vorgesehen ist.

Eine besonders zweckmäßige Lösung sieht vor, dass zwischen der Ausnehmung und den beiderseits derselben liegenden Distanzelementen die Teilflächen der Auflagefläche vorgesehen sind.

Besonders günstig ist das Vorsehen derartiger Distanzelemente bei einer ein Griffrohr aufweisenden Griffbasis aus einem nicht weichelastischen Material, jedoch aus einem Kunststoffmaterial, aus welchem dann auch die Distanzelemente hergestellt sind, so dass beim Aufschieben des Handgriffs auf ein derartiges Griffrohr eine Deformation der Distanzelemente ebenfalls möglich ist, jedoch in geringem Maße.

Alternativ oder ergänzend wird die eingangs genannte Aufgabe bei einem Handgriff der eingangs beschriebenen Art erfindungsgemäß dadurch gelöst, dass der Handgriff eine Griffbasis und die die Griffbasis überdeckende Griffhülle aufweist und dass an die Griffbasis eine Stützstruktur aus deformierbarem Material im Bereich des Aufnahmeraums angeformt ist, mit welcher die Griffbasis an dem Griffstück des Lenkers abstützbar ist.

Der Vorteil dieser Lösung ist darin zu sehen, dass mit der Stützstruktur aus deformierbarem Material die Möglichkeit besteht, Fertigungstoleranzen zwischen der Griffbasis und dem Griffstück des Lenkers auszugleichen, und somit stets einen optimalen Sitz des Handgriffs auf dem Griffstück zu gewährleisten, wobei die Stützstruktur dabei mehr oder weniger starke Deformationen erfährt.

Hinsichtlich der Art des Anformens der Stützstruktur an die Griffbasis sind unterschiedliche Möglichkeiten denkbar. Beispielsweise wäre es denkbar, die Stützstruktur als eigenständiges Teil in den Aufnahmeraum der Griffbasis einzusetzen.

Besonders vorteilhaft ist es jedoch, wenn die Stützstruktur an die Griffbasis durch Anspritzen angeformt ist, da dadurch eine einfache Herstellung der Stützstruktur bei optimaler Fixierung an der Griffbasis realisierbar ist.

Prinzipiell könnte dabei die Stützstruktur aus einem für die jeweilige Funktion geeigneten deformierbaren Material sein. Um jedoch eine möglichst einfache und kostengünstige Herstellung des Handgriffs zu erreichen, ist vorzugsweise vorgesehen, dass das deformierbare Material einem Griffhüllenmaterial entspricht, so dass sowohl für die Griffhülle als auch die Stützstruktur dasselbe Material verwendet werden kann.

Beim Verwenden derselben Materialien für die Griffhülle und die Stützstruktur sieht ein aus Gründen der Einfachheit der Herstellung besonders günstiges Ausführungsbeispiel vor, dass die Griffhülle durch Umspritzen der Griffbasis mit dem Griffhüllenmaterial an die Griffbasis angeformt ist und dass die Stützstruktur in einem Spritzvorgang zusammen mit der Griffhülle an die Griffbasis angeformt ist.

Diese Lösung hat den großen Vorteil, dass damit in einem Spritzvorgang sowohl die Griffhülle als auch Stützstruktur an der Griffbasis angeformt werden können.

Um einen guten Halt sowohl der Stützstruktur als auch der Griffhülle an der Griffbasis zu gewährleisten, sieht eine besonders günstige Lösung vor, dass die Stützstruktur mit der Griffhülle durch die Griffbasis durchsetzende Durchbrüche unmittelbar verbunden ist.

Eine derartige unmittelbare Verbindung zwischen der Griffhülle und der Stützstruktur schafft die Möglichkeit einer stabilen Verbindung derselben mit der Griffbasis, so dass insbesondere beim Aufschieben der Griffbasis auf das Griffstück des Lenkers kein Ablösen der Stützstruktur erfolgen kann und in gleicher Weise auch die Griffhülle selbst bei starker Beanspruchung sich nicht von der Griffbasis lösen kann.

Besonders vorteilhaft lässt sich eine derartige Lösung dann realisieren, wenn die Stützstruktur aus beim Spritzen der Griffhülle durch die Durchbrüche in der Griffbasis hindurchtretendem Griffhüllenmaterial gebildet ist, so dass sich in einem Arbeitsgang die mit der Griffhülle verbundene Stützstruktur herstellen lässt.

Hinsichtlich der Ausbildung der Stützstruktur wurden bislang keine näheren Angaben gemacht. Die Stützstruktur könnte dabei lediglich aus Rippen ausgebildet sein.

Eine vorteilhafte Lösung sieht jedoch vor, dass die Stützstruktur eine aufgrund elastischer Deformation derselben an einer Oberfläche des Griffstücks anlegbare Anlagefläche aufweist, so dass eine flächenhafte Abstützung der Griffbasis an dem Griffstück erfolgt.

Prinzipiell könnte eine vollflächige Abstützung der Stützstruktur auf der Oberfläche des Griffstücks erfolgen.

Um jedoch das Deformationsverhalten der Stützstruktur optimieren zu können, ist vorzugsweise vorgesehen, dass die Stützstruktur aus Teilbereichen gebildet ist, die durch Ausnehmungen zumindest teilweise voneinander getrennt sind. Damit wird die Möglichkeit eröffnet, dass sich Teilbereiche der Stützstruktur optimal und insbesondere unabhängig voneinander deformieren können.

Besonders günstig ist es, wenn die Auflagefläche der Stützstruktur durch die Ausnehmungen in der Stützstruktur in Teilflächen aufgeteilt ist, welche dann an der Oberfläche des Griffstücks anlegbar sind.

Hinsichtlich der Ausnehmungen wurden bislang keine näheren Angaben gemacht. Eine besonders günstige Lösung sieht vor, dass die Ausnehmungen die Stützstruktur von der Auflagefläche bis zur Griffbasis durchsetzen.

Dabei können die Ausnehmungen in jeder Form, beispielsweise wendelförmig oder über Kreuz in der Stützstruktur verlaufen.

Eine besonders günstige Lösung sieht vor, dass die Ausnehmungen langgestreckt und ungefähr parallel zu einer Längsmittelachse der Griffbasis verlaufen.

Somit ist zweckmäßigerweise auch vorgesehen, dass die Auflagefläche der Stützstruktur nur auf Teilflächenbereichen der Oberfläche des Griffstücks aufliegt.

Um eine optimal sichere Abstützung des Handgriffs an dem Griffstück zu erhalten, ist vorzugsweise vorgesehen, dass die Stützstruktur insgesamt eine Griffstückaufnahme für das Griffstück bildet.

Hinsichtlich der Verbindung zwischen dem Handgriff und dem Griffstück des Lenkers wurden bislang keine näheren Angaben gemacht. So sieht eine vorteilhafte Lösung vor, dass die Griffbasis mit dem Griffstück über ein Halteelement formschlüssig verbindbar ist.

Ein derartiges Halteelement kann beispielsweise ein Haltestift oder eine Schraube sein, welche sowohl die Griffbasis als auch das Griffstück durchgreifen.

Im einfachsten Fall ist dabei die Schraube durch die Griffbasis hindurch in eine Aufnahme des Griffstücks eingeschraubt.

Alternativ dazu sieht eine vorteilhafte Lösung vor, dass die Griffbasis über die Stützstruktur mit dem Griffstück verbindbar ist.

In diesem Fall erfolgt ein Festlegen des gesamten Handgriffs über die Stützstruktur und nicht über ein zwischen der Griffbasis und dem Griffstück wirkendes zusätzliches Halteelement.

Im einfachsten Fall ist dabei die Stützstruktur stoffschlüssig mit dem Griffstück verbindbar.

Eine derartige stoffschlüssige Verbindung sieht beispielsweise die Verwendung eines Klebstoffs vor.

Insbesondere im Fall von in der Stützstruktur vorgesehenen Ausnehmungen besteht damit die Möglichkeit, den Klebstoff optimal auf die Stützstruktur und insbesondere die Auflagefläche der Stützstruktur aufzubringen und auf dieser zu verteilen, da beim Aufschieben des Handgriffs ein auf das Griffstück oder die Stützstruktur aufgetragener Klebstoff in die Ausnehmungen eintritt und durch die Ausnehmungen gleichmäßiger auf der Auflagefläche der Stützstruktur verteilt werden kann, insbesondere durch eine Relativbewegung zwischen dem Griffstück und der Stützstruktur, beispielsweise durch Aufschieben der Stützstruktur und gleichzeitiges Verdrehen derselben.

Aus fertigungstechnischen Gründen ist es besonders vorteilhaft, wenn der Handgriff aus in Umfangsrichtung geschlossen um das Griffstück verlaufenden Teilen aufgebaut ist.

Alternativ oder ergänzend zu den bislang beschriebenen Lösungen sieht ein besonders vorteilhaftes Ausführungsbeispiel vor, dass der Handgriff elektrisch beheizbar ist.

Damit besteht die Möglichkeit, in einfacher Weise insbesondere bei lenkergeführten Fahrzeugen zum Einsatz bei niedrigen Außentemperaturen den Handgriff mit dem notwendigen Komfort zu versehen.

Besonders günstig ist es dabei, wenn die Griffbasis mit mindestens eine Heizschleife bildenden Heizdrähten versehen ist, die in einfacher Weise auf der Griffbasis angeordnet werden können und nachfolgend durch Umspritzen der Griffbasis mit der Griffhülle in dem erfindungsgemäßen Handgriff fixiert werden können.

Ein Ausführungsbeispiel sieht vor, dass die Heizdrähte mindestens eine Heizwendel bilden, da sich diese in einfacher Weise auf der Griffbasis anordnen lässt.

Eine günstige Lösung sieht vor, dass die die Heizschleife bildenden Heizdrähte endseitig durch ein Umlenkstück verbunden sind.

Vorzugsweise kann dabei das Umlenkstück ein separates Teil sein, welches mit den Heizdrähten verbunden ist.

Eine einfach herstellbare Lösung sieht jedoch vor, dass die Heizdrähte und das Umlenkstück durch einen einstückigen zusammenhängenden Draht gebildet sind.

Hinsichtlich der Fixierung der Heizwendel wurden bislang keine näheren Angaben gemacht. Beispielsweise wäre es denkbar, die Heizwendel über ihre ganze Länge an der Griffbasis zu fixieren.

Eine günstige Lösung sieht jedoch vor, dass die Heizwendel endseitig an der Griffbasis fixierbar ist.

Dabei sind alle Arten der endseitigen Fixierung der Heizwendel denkbar.

Beispielsweise ist es denkbar, die Heizwendel endseitig mit der Griffbasis zu verkleben.

Eine hinsichtlich der Fertigung günstige Lösung sieht vor, dass die Heizwendel endseitig in einer Aufnahme an der Griffbasis fixierbar ist.

Eine derartige Aufnahme ist beispielsweise als Vorsprung oder Vertiefung, oder Haken oder ähnliches ausgebildet.

Besonders günstig ist es, wenn die Heizwendel mit dem Umlenkstück an der Griffbasis endseitig fixierbar ist.

Eine derartige Fixierung des Umlenkstücks der Heizwendel hat den Vorteil, dass dieses in einfacher Weise an der Heizwendel, beispielsweise in der Aufnahme, festgelegt werden kann.

Dabei besteht die Möglichkeit, die Aufnahme unmittelbar an der Griffbasis anzuordnen, beispielsweise dadurch, dass die Aufnahme unmittelbar an die Griffbasis angespritzt oder auch angeklebt oder bei der Herstellung der Griffbasis durch einen Formprozess geschaffen wird.

Eine andere, zweckmäßige Lösung sieht allerdings vor, dass die Heizwendel endseitig über ein an der Griffbasis fixierbares Einsatzteil an der Griffbasis fixierbar ist.

Insbesondere ist es dabei günstig, wenn das Einsatzteil die Aufnahme für das Umlenkstück der Heizwendel aufweist.

Noch vorteilhafter ist es jedoch, wenn ein endseitig der Heizwendel vorgesehenes Umlenkstück über ein Einsatzteil an der Griffbasis fixierbar ist.

Ein derartiges Einsatzteil schafft die Möglichkeit, das Umlenkstück in einfacher Weise an der Griffbasis zu fixieren.

Beispielsweise könnte mit einem derartigen Einsatzteil das Umlenkstück an der Griffbasis durch Klemmen festgelegt werden.

Eine besonders günstige Lösung sieht jedoch vor, dass das Einsatzteil eine Aufnahme für das Umlenkstück der Heizwendel aufweist, in welcher das Umlenkstück eingehängt werden kann.

Das Einsatzteil könnte grundsätzlich durch Kleben oder Schrauben an dem Griffstück fixiert werden.

Eine besonders günstige Lösung sieht vor, dass das Einsatzteil an der Griffbasis durch an beide angeformte Formschlusselemente fixierbar ist, so dass dadurch eine einfache Möglichkeit für die Fixierung des Einsatzteils besteht.

Um die Heizdrähte auch im Bereich der Zuleitung an der Griffbasis fixieren zu können, ist vorzugsweise vorgesehen, dass die Zuleitung in einem Fixierelement an der Griffbasis fixierbar ist.

Dadurch ist insbesondere im Zusammenhang mit dem Umlenkstück ein Fixieren der Heizdrähte an der Griffbasis realisierbar, so dass die Heizdrähte für das nachfolgende Umspritzen der Griffbasis zum Anformen der Griffhülle eindeutig festgelegt sind.

Darüber hinaus erlaubt ein derartiges Fixierelement auch eine Sicherung der Zuleitung relativ zur Griffbasis, so dass auch im Bereich von Anschlüssen der Heizdrähte an die Zuleitung keine Zugbelastungen auftreten.

Die Zuleitung kann dabei in unterschiedlichster Weise an dem Fixierelement gehalten sein. Eine vorteilhafte Lösung sieht vor, dass die Zuleitung an dem Fixierelement kraftschlüssig gehalten ist.

Insbesondere ist dabei die Zuleitung durch das Fixierelement geklemmt.

Um beim Umspritzen der Griffbasis zum Anformen der Griffhülle auch im Bereich des Fixierelements eine dauerhafte Festlegung der Zuleitung zu erreichen ist vorzugsweise vorgesehen, dass das Fixierelement in die Griffhülle eingebettet ist.

Darüber hinaus ist zweckmäßigerweise vorgesehen, dass an die Griffhülle ein Knickschutz für die Zuleitung angeformt ist.

Hinsichtlich einer optimalen Beheizung des Handgriffs wurden bislang keinen näheren Angaben gemacht. So sieht eine besonders vorteilhafte Ausführungsform vor, dass in dem Handgriff mehrere Heizschleifen vorgesehen sind.

Durch das Vorsehen mehrerer Heizschleifen besteht die Möglichkeit, die Heizleistung in dem Handgriff zu optimieren.

Insbesondere ist es dabei günstig, wenn die mehreren Heizschleifen in Parallelschaltung bestrombar sind, so dass dadurch durch gemeinsames oder wechselweises Bestromen der Heizschleifen unterschiedliche Heizleistungen in dem Handgriff zur Verfügung stehen.

Eine besonders günstige Lösung sieht dabei vor, dass die Heizschleifen unterschiedliche Heizleistungen aufweisen, so dass durch wahlweises Zuschalten der jeweiligen Heizschleifen deren Heizleistungen einzeln oder kombiniert zur Verfügung stehen.

Insbesondere ermöglicht das Vorsehen mehrerer in Parallelschaltung bestrombarer Heizschleifen eine sehr einfache Steuerung der Heizleistung dahingehend, dass lediglich einfache elektrische Schaltelemente erforderlich sind, um die jeweiligen Heizschleifen zu- oder abzuschalten und somit keine aufwändige elektronische Regelung der Heizleistung notwendig ist.

Ein besonders einfaches Steuern der Heizleistung lässt sich dann erreichen, wenn den mehreren Heizschleifen eine Schalteinrichtung zugeordnet ist, mit welcher einzelne oder mehrere Heizschleifen zuschaltbar sind.

Weiterhin sieht eine vorteilhafte Lösung vor, dass die mehreren Heizschleifen aus elektrisch isolierten elektrischen Leitungen gebildet sind. Dies schafft die Möglichkeit, die mehreren Heizschleifen so zu verlegen, dass nicht auf eine elektrische Isolation derselben geachtet werden muss.

Eine besonders einfache und vorteilhafte Art der Isolierung sieht vor, dass die elektrischen Leitungen lackisoliert sind.

Um die mehreren Heizschleifen in einfacher Art und Weise an der Griffbasis anordnen zu können, ist vorgesehen, dass die mehreren Heizschleifen endseitig in derselben, an der Griffbasis vorgesehenen Aufnahme fixierbar sind.

Diese Aufnahme kann, wie bereits beschrieben, entweder unmittelbar an der Griffbasis angeordnet, beispielsweise in diese eingeformt sein, oder an dem Einsatzteil vorgesehen sein.

Ferner sieht eine vorteilhafte Lösung vor, dass die mehreren Heizschleifen mit nebeneinander verlaufenden Heizdrähten an der Griffbasis angeordnet sind.

Das Anordnen derartiger mehrerer nebeneinanderliegender Heizdrähte erlaubt es beispielsweise die Heizschleifen an der Griffbasis so anzuordnen, dass die jeweiligen ersten und zweiten Heizdrähte der mehreren Heizschteifen in denselben Nuten verlaufen.

Alternativ dazu sieht eine vorteilhafte Lösung vor, dass die jeweiligen ersten und zweiten Heizdrähte der mehreren Heizschleifen zwischen denselben Vorsprüngen verlaufen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen halbseitigen Längsschnitt durch ein erstes Ausführungsbeispiel eines erfindungsgemäßen Handgriffs aufgesetzt auf ein Griffstück eines Lenkers eines lenkergeführten Fahrzeugs;
- Fig. 2: eine Darstellung des ersten Ausführungsbeispiels ohne das Griffstück des Lenkers;
- Fig. 3: eine Darstellung ähnlich Fig. 1 eines zweiten Ausführungsbeispiels eines erfindungsgemäßen Handgriffs;
- Fig. 4: eine Darstellung ähnlich Fig. 1 eines dritten Ausführungsbeispiels eines erfindungsgemäßen Handgriffs;
- Fig. 5: eine ausschnittsweise vergrößerte Darstellung eines Bereichs X in Fig. 4;
- Fig. 6: eine Darstellung ähnlich Fig. 1 eines vierten Ausführungsbeispiels eines erfindungsgemäßen Handgriffs;
- Fig. 7: eine Darstellung eines fünften Ausführungsbeispiels eines erfindungsgemäßen Handgriffs mit lediglich im Schnitt dargestellter Griffhülle, jedoch in Draufsicht dargestellter Griffbasis mit Heizwendel;
- Fig. 8: eine perspektivische Darstellung einer Griffbasis eines sechsten Ausführungsbeispiels eines erfindungsgemäßen Handgriffs;
- Fig. 9: einen Schnitt längs Linie 9-9 in Fig. 8;
- Fig. 10: eine perspektivische vergrößerte Darstellung einer Fixiereinrichtung des sechsten Ausführungsbeispiels;
- Fig. 11: eine perspektivische Darstellung der auf die Griffbasis mit der Fixiereinrichtung gemäß dem sechsten Ausführungsbeispiel aufgespritzten Griffhülle;
- Fig. 12: eine perspektivische Darstellung ähnlich Fig. 10 einer Griffbasis mit Fixiereinrichtung eines siebten Ausführungsbeispiels;
- Fig. 13: eine perspektivische Darstellung der auf die Griffbasis mit Fixiereinrichtung durch Umspritzen angeformten Griffhülle;
- Fig. 14: eine Fixiereinrichtung gemäß einem achten Ausführungsbeispiel eines erfindungsgemäßen Handgriffs;.
- Fig. 15: eine Fixiereinrichtung gemäß einem neunten Ausführungsbeispiel eines erfindungsgemäßen Handgriffs;
- Fig. 16: eine Schnittdarstellung ähnlich Fig. 1 eines zehnten Ausführungsbeispiels eines erfindungsgemäßen Handgriffs;
- Fig. 17: eine Darstellung einer Heizschleife gemäß dem ersten Ausführungsbeispiel;
- Fig. 18: eine Darstellung mehrerer Heizschleifen bei einem elften Ausführungsbeispiel eines erfindungsgemäßen Handgriffs;
- Fig. 19: eine Darstellung mehrere Heizschleifen bei einem zwölften Ausführungsbeispiel ähnlich Fig. 18 mit einer vereinfachten Bestromung;
- Fig. 20: eine Darstellung der Griffbasis ähnlich Fig. 7 bei dem zwölften Ausführungsbeispiel und
- Fig. 21: eine Darstellung der Realisierung mehrerer Heizschleifen bei einem dreizehnten Ausführungsbeispiel eines erfindungsgemäßen Handgriffs.

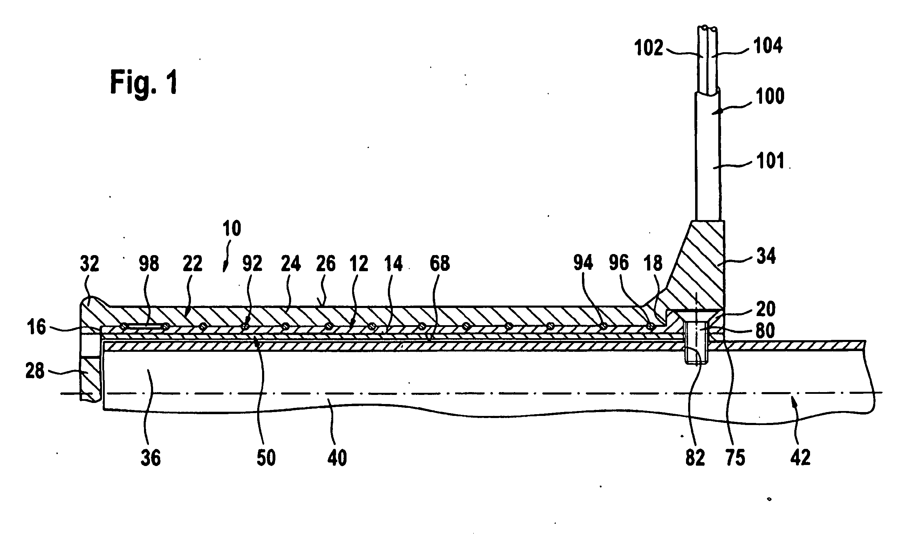

Ein in Fig. 1 dargestelltes erstes Ausführungsbeispiel eines erfindungsgemäßen, als Ganzes mit 10 bezeichneten Handgriffs umfasst eine Griffbasis 12, welche ein insbesondere in Azimutalrichtung geschlossen ausgebildetes Griffrohr 14 aufweist, das sich von einem äußeren Ende 16 bis zu einem inneren Ende 18 erstreckt und im Bereich des inneren Endes 18 in einen Griffrohrbund 20 übergeht.

Die Griffbasis 12 ist dabei vorzugsweise aus einem im Wesentlichen steifen und formstabilen Kunststoffmaterial ausgebildet und stellt eine formstabile Basis des Handgriffs 10 dar.

Die Griffbasis 12 ist ferner umschlossen von einer ebenfalls in Azimutalrichtung geschlossen ausgebildeten Griffhülle 22, welche sich ebenfalls über das gesamte Griffrohr 14 von dem äußeren Ende 16 bis zum inneren Ende 18 und auch über den Griffrohrbund 20 hinweg erstreckt und diese vollständig überdeckt. Dabei ist die Griffhülle 22 aus einem weichelastischen und somit deformierbaren Material ausgebildet, welches mit einem das Griffrohr 14 übergreifenden Hüllrohr 24 eine Grifffläche 26 bildet, die sich aufgrund des aus dem weichelastischem Material ausgebildeten Hüllrohrs 24 beim Zugriff durch eine menschliche Hand zumindest geringfügig deformieren lässt und somit ein angenehmes Griffgefühl vermittelt.

Die Griffhülle 22 umfasst dabei außerdem noch einen das äußere Ende 16 des Griffrohrs 14 übergreifenden äußeren Abschluss 28 und einen im Bereich des äußeren Abschlusses 28 angeordneten und radial nach außen über die Grifffläche 26 überstehenden Führungswulst 32 für eine auf der Grifffläche 26 aufliegende Hand.

Ferner umfasst die Griffhülle 22 noch einen inneren Führungsring 34, welcher im Bereich des inneren Endes 18 des Griffrohrs 14 und beispielsweise auch im Bereich des Griffrohrbundes 20 angeordnet ist und diese übergreift.

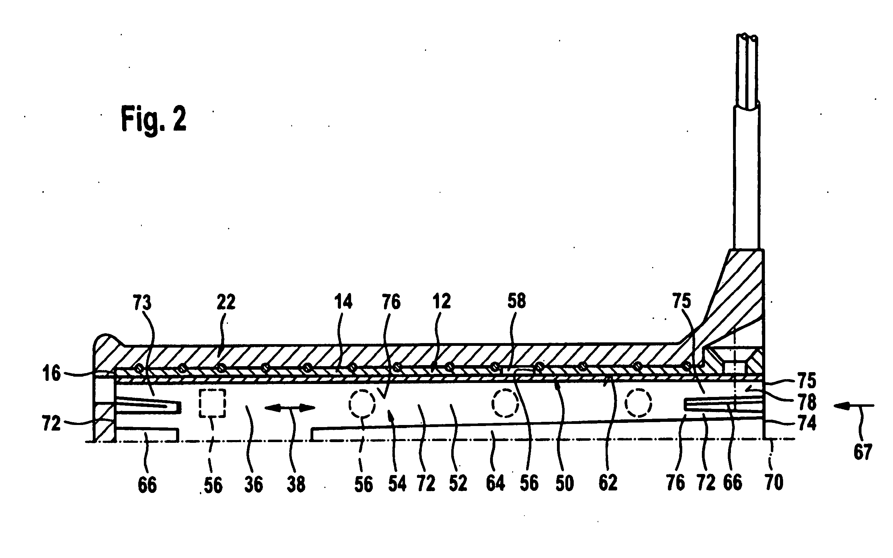

Wie in Fig. 2 dargestellt, umschließt die Griffbasis 12 einen sich mit einer Längsausdehnung 38 innerhalb der Griffbasis 12 erstreckenden Aufnahmeraum 36 für ein in Fig. 1 dargestelltes Griffstück 40 eines Lenkers 42 eines lenkergeführten Fahrzeugs, wobei das Griffstück 40 vollständig in den Aufnahmeraum 36 eingreift und von dem erfindungsgemäßen Handgriff 10 rings umlaufend umschlossen ist.

Um nun die formsteife Griffbasis 12 unter Ausgleich sämtlicher Toleranzen auf dem Griffstück 40 des Lenkers 42 aufsetzen zu können, ist auf einer der Griffhülle 22 abgewandten Seite der Griffbasis 12 eine als Ganzes mit 50 bezeichnete Stützstruktur aufgetragen, welche aus einem weichelastischen Material hergestellt ist, die eine an dem Griffstück 40 flächenhaft anlegbare Auflagefläche 52 umfasst, die ihrerseits eine Griffstückaufnahme 54 für das Griffstück des Lenkers bildet.

Bei dem unter Bezug auf Fig. 1 und Fig. 2 beschriebenen ersten Ausführungsbeispiel ist dabei die Stützstruktur 50 aus demselben weichelastischen Material hergestellt wie die Griffhülle 22 und mit der Griffhülle 22 über Durchbrüche 56 in der Griffbasis 12 durchsetzende Verbindungszapfen 58 verbunden, wobei die Verbindungszapfen sowohl an die Griffhülle 22 als auch an die Stützstruktur 50 einstückig angeformt sind. Vorzugsweise ist die Griffbasis 12 mit einer Vielzahl derartiger Durchbrüche 56 versehen, die von einer entsprechenden Zahl von Verbindungszapfen 58 durchsetzt sind, so dass allein die Tatsache, dass sich die Stützstruktur 50 flächenhaft über eine dem Griffstück 40 zugewandte Innenfläche 62 des Griffrohrs 14 der Griffbasis 12 erstreckt, während sich das Hüllrohr 24 der Griffhülle 22 auf der gegenüberliegenden Seite erstreckt, eine letztlich formschlüssige Fixierung der Griffhülle 22 und der Stützstruktur 50 relativ zur Griffbasis 12 besteht.

Vorzugsweise ist die Stützstruktur 50 dadurch herstellbar, dass im Zuge des Aufspritzens des Hüllrohrs 24 auf die Griffbasis 12 die Griffhülle 22 bildendes Material durch die Durchbrüche 56 der Griffbasis 12 hindurchtritt und sich über die Innenfläche 62 des Griffrohrs 14 ausdehnt, so dass dadurch in einem Herstellungsschritt sowohl die Griffhülle 22 als auch die Stützstruktur 50 an die Griffbasis 12 angespritzt werden können, und folglich die Griffhülle 22 sowie die Stützstruktur 50 und die diese verbindenden Verbindungszapfen 58 in einem einzigen Herstellungsschritt an die Griffbasis 12 anformbar und mit dieser formschlüssig verbindbar sind.

Die Stützstruktur 50 überdeckt dabei die Innenfläche 62 des Griffrohrs 14 weitgehend flächenhaft unter Ausbildung der Auflagefläche 52, welche eine Flächenausdehnung aufweist, die mindestens zwei Drittel der Flächenausdehnung der Innenfläche 62 des Griffrohrs 14 beträgt.

Die flächige Ausdehnung der Stützstruktur 50 ist durch Ausnehmungen 64, 66 unterbrochen, wobei sich diese Ausnehmungen 64, 66 in Richtung parallel oder antiparallel zu einer Einsteckrichtung 67 und ungefähr parallel zu einer Längsmittelachse 70 der Griffbasis 12 und des Handgriffs 10, insbesondere parallel zu dieser, erstrecken und dabei sich ausgehend von der Auflagefläche 52 der Stützstruktur in radialer Richtung zum Griffstück 40 und somit einer Richtung der Griffbasis 12 in die Stützstruktur hineinreichen, vorzugsweise bis zu deren Innenfläche 62 reichen.

Ferner erstrecken sich die Ausnehmungen 64, 66 vorzugsweise ausgehend von jeweils einer im Bereich des äußeren Endes 16 der Griffbasis 12 liegenden Stirnseite 72 der Stützstruktur 50 in Richtung einer gegenüberliegenden Stirnseite 74 mit Einstecköffnung 75 der Stützstruktur 50, wobei die Stirnseite 74 im Bereich des Griffrohrbundes 20 der Griffbasis 12 liegt, oder umgekehrt. Dabei erstrecken sich beispielsweise kurze derartige Ausnehmungen 66 von der jeweiligen Stirnseite 72 bzw. 74 in Richtung der jeweils anderen Stirnseite 74 bzw. 72 über eine Distanz, die weniger als die Hälfte der Ausdehnung der Griffbasis 12 in Richtung der Längsmittelachse 70 entspricht oder in Form der langgestreckten Ausnehmungen 64 über nahezu die Hälfte oder mehr als die Hälfte der Ausdehnung der Griffbasis 12 in Richtung der Längsmittelachse 70.

Durch die sich in die Stützstruktur 50 hinein in Richtung der Griffbasis 12 erstreckenden Ausnehmungen 64, 66, wird die Stützstruktur 50 insgesamt in streifenförmige Teilbereiche 73 und/oder 75 unterteilt, die dann ihrerseits Teilflächen 76, 78 der Auflagefläche 52 bilden, wobei die Summe aller Teilflächen 76, 78 insgesamt ebenfalls eine Flächenausdehnung ergibt, welche mindestens der Hälfte der Flächenausdehnung der Innenfläche 62 der Griffbasis 12, noch besser mindestens zwei Drittel dieser Flächenausdehnung beträgt, so dass insgesamt der Handgriff 10 großflächig auf dem Griffstück 40 des Lenkers 42 abgestützt ist.

Außerdem beträgt die Flächenausdehnung der Teilflächen 76, 78 mehr als zwei Drittel einer Flächenausdehnung einer Außenfläche 68 des Griffstücks 40 auf welcher die Teilflächen 76, 78 aufliegen.

Durch die Tatsache, dass die Stützstruktur 50 aus einem weichelastischen Material hergestellt ist, besteht die Möglichkeit mit der Stützstruktur 50, Fertigungstoleranzen im Bereich des Griffstücks 40 des Lenkers 42 und Fertigungstoleranzen der Griffbasis 12 durch entsprechende Deformation der Stützstruktur 50 auszugleichen und somit stets die Griffbasis 12 spielfrei an dem Griffstück 40 abzustützen.

Dabei kann, wie in Fig. 1 dargestellt, die Fixierung des Handgriffs 10 über eine Schraube 80 erfolgen, welche beispielsweise den Griffrohrbund 20 der Griffbasis 12 und die Stützstruktur 50 durchsetzt und in ein Schraubenloch 82 im Griffstück 40 des Lenkers 42 eingreift.

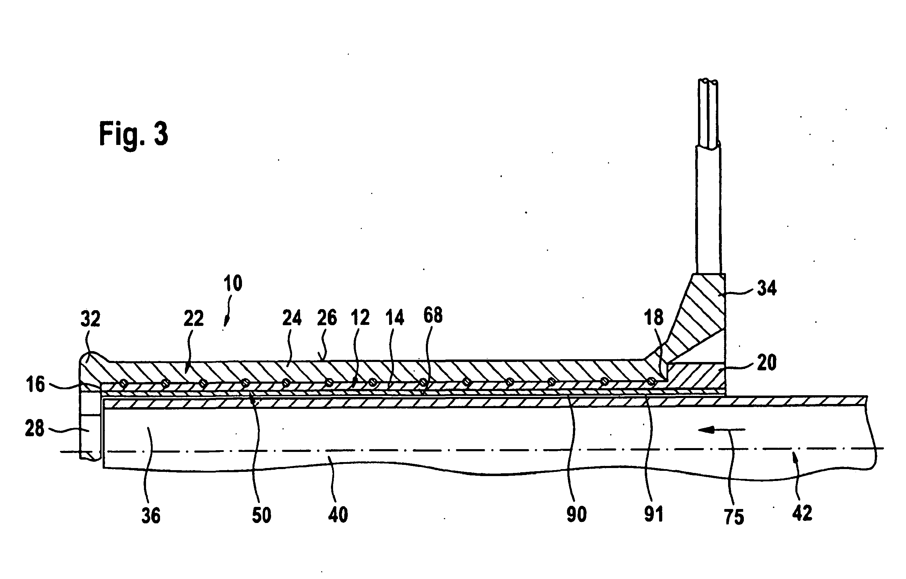

Alternativ dazu kann, wie in Fig. 3 im Zusammenhang mit einem zweiten Ausführungsbeispiel dargestellt, die Fixierung des Handgriffs 10 auf dem Griffstück 40 durch eine Klebstoffschicht 90 erfolgen, welche flächig in einem Spaltraum 91 zwischen der Anlagefläche 52 der Stützstruktur und der Außenfläche 68 des Griffstücks 40 wirksam ist, wobei ein Auftragen der Klebstoffschicht 90 durch die als Klebstoffreservoir dienenden Ausnehmungen 64, 66 erleichtert wird, in welche beim Aufschieben des Handgriffs 10 mit der Stützstruktur 50 Klebstoff eindringen und durch welche der Klebstoff beim Aufschieben der Stützstruktur 50 auf das Griffstück 40 in den Spaltraum 91 zwischen der Auflagefläche 52 und der Oberfläche 68 des Griffstücks 40 verteilt werden kann.

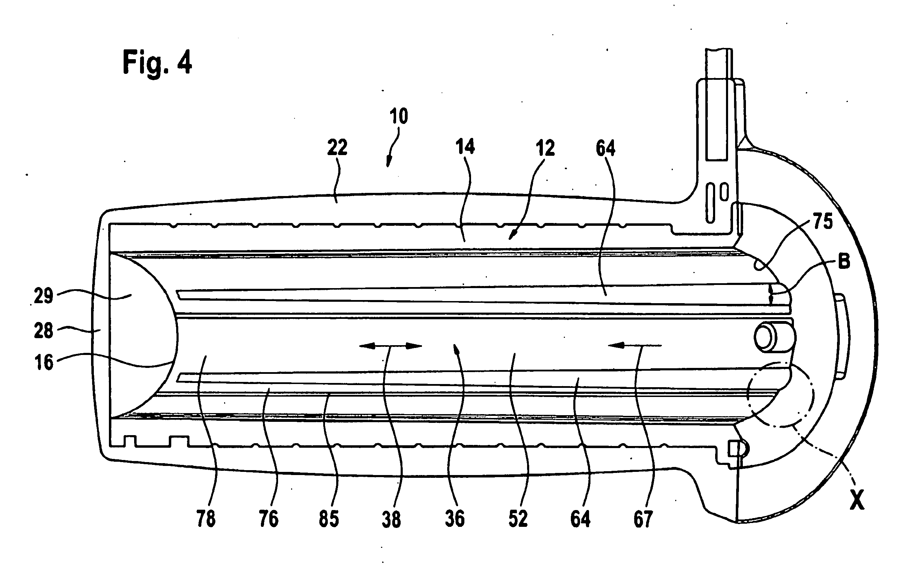

Bei einem dritten Ausführungsbeispiel, dargestellt in Fig. 4 umfasst der als Ganzes mit 10 bezeichnete erfindungsgemäße Handgriff die Griffbasis 12 mit dem ebenfalls insbesondere azimutal geschlossen ausgebildeten Griffrohr 14, auf welchem die ebenfalls insbesondere azimutal geschlossen ausgebildete Griffhülle 22 angeordnet ist.

Bei diesem dritten Ausführungsbeispiel bildet das Griffrohr 12 selbst die Ausnehmung 36, welche sich von der Einstecköffnung 75 im Wesentlichen durch das gesamte Griffrohr 14 hindurcherstreckt, das als einstückiges Teil die Ausnehmung 36 umschließt.

Bei diesem Ausführungsbeispiel sind die Ausnehmungen 64 in das Griffrohr 14 aus formstabilem Kunststoffmaterial selbst eingeformt und erstrecken sich von der Einstecköffnung 75 in der Einsteckrichtung 67 im Wesentlichen bis zu dem äußeren Ende des Griffrohrs, an welchem außerdem der Abschluss 28 der Griffhülle 22 anliegt, die mit einer Innenwand 29 den Aufnahmeraum 36 auf seiner der Einstecköffnung 75 gegenüberliegenden Seite abschließt.

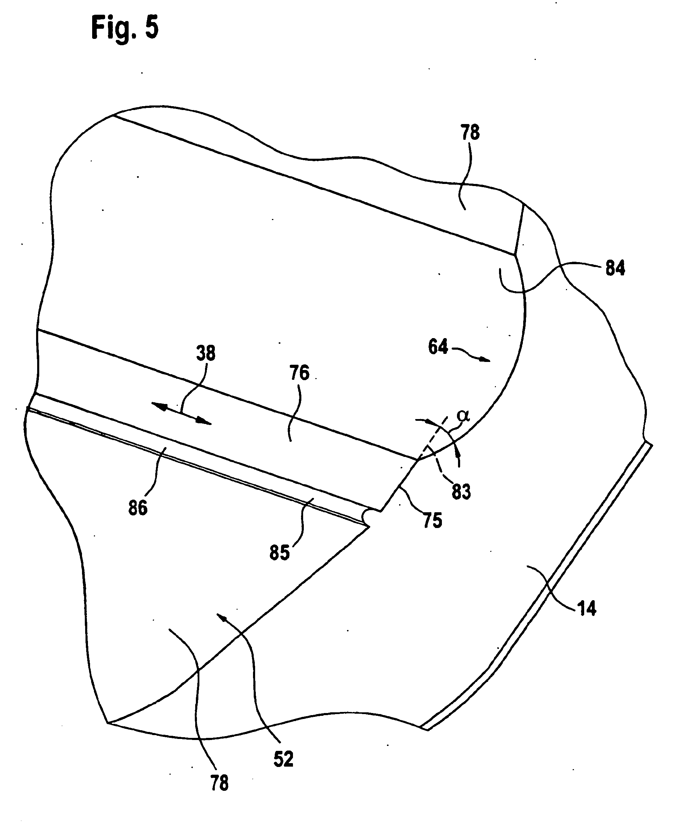

Die mehreren in Umfangsrichtung um das Griffstück 40 verteilt angeordneten Ausnehmungen 64 unterteilen wie bereits im Zusammenhang mit den vorstehenden Ausführungsbeispielen beschrieben, die Auflagefläche 52 in Teilflächen 76 und 78, welche beiderseits der jeweiligen Ausnehmung 64 liegen. Vorzugsweise ist, wie in Fig. 5 vergrößert dargestellt, die Ausnehmung 64 so ausgebildet, dass sie sich ausgehend von den Teilflächen 76 und 78 der Auflagefläche 72 als Vertiefung in das Griffrohr 14 hineinerstreckt und dabei mit Seitenwänden 83, 84 an die jeweiligen Teilflächen 76, 78 der Auflageflächen 52 angrenzt, die in einem spitzen Winkel a zu den Teilflächen 76, 78 verlaufen, so dass ein im Wesentlichen stufenfreier Übergang zwischen der Ausnehmung 64 und den Teilflächen 76, 78 entsteht, der ein Herausgleiten des Klebstoffs aus der Ausnehmung 64 über die Seitenflächen 83, 84 erleichtert, um den Klebstoff vorteilhaft aus der Ausnehmung 64 heraus in den Spaltraum 91 zwischen den Teilflächen 76 und 78 sowie der Außenfläche 68 des Griffstücks 40 bewegen zu können, damit sich der Klebstoff in dem Spaltraum 91 festsetzen und dort seine Klebewirkung zwischen der Außenfläche 68 des Griffstücks 40 und den Teilflächen 76, 78 entfalten kann.

Um bei dem im Wesentlichen aus nicht weichelastischem Kunststoffmaterial hergestellten Griffrohr 14 eine gleichmäßige Ausbildung des Spaltraums 91 in Umfangsrichtung um das Griffstück 40 herum zu erreichen, erheben sich von der Auflagefläche 52 in definiertem Winkelabstand um das Griffstück 40 herum Distanzelemente 85, welche als sich in Richtung der Längsausdehnung 38, im Wesentlichen ungefähr parallel zu dieser erstreckende Leisten ausgebildet sind und sich mit Kammflächen 86 dann unmittelbar auf der Außenfläche 68 des Griffstücks abstützen, so dass die beiderseits der Distanzelemente liegenden Teilflächen 76, 78 der Auflagefläche 52 den für die Aufnahme des Klebstoffs erforderlichen Spaltraum 91 mit der für den jeweiligen Klebstoff erforderlichen Höhe bilden können.

Dabei sind die Distanzelemente 85 vorzugsweise als in Umfangsrichtung des Griffstücks 40 beabstandete schmale Leisten ausgebildet, die beim Einstecken des Griffstücks 40 über die Einstecköffnung 75 zum Ausgleich von Toleranzen eine gewisse

Deformation erfahren können, allerdings dergestalt, dass die Deformation aller Distanzelemente 85, die um das Griffstück 40 herum zur Abstützung auf diesem angeordnet sind; in ungefähr gleichem Maße erfolgt, so dass auch die Höhe des Spaltraums 91 jeweils neben den Distanzelementen 85 in Umfangsrichtung um das Griffstück 40 herum im Wesentlichen gleich groß ist.

Wie beim dritten Ausführungsbeispiel, insbesondere in Fig. 4 dargestellt, haben die Distanzelemente 85 in Umfangsrichtung um das Griffstück 40 über die gesamte Längsausdehnung 38 des Aufnahmeraums 36 dieselbe Dicke und ungefähr dieselbe Querschnittsfläche.

Im Gegensatz dazu sind die Ausnehmungen 64 so ausgebildet, dass deren Breite B in Umfangsrichtung um das Griffstück 40 mit zunehmender Erstreckung der Ausnehmungen in der Einsteckrichtung 67 geringer wird.

Außerdem ist auch die Tiefe der Ausnehmungen 64 so gewählt, dass diese ausgehend von der Einstecköffnung 75 mit zunehmender Erstreckung der Ausnehmungen 64 in der Einsteckrichtung 67 abnimmt, so dass insgesamt auch eine Querschnittsfläche der Ausnehmungen 64 ausgehend von der Einstecköffnung 75 mit zunehmender Erstreckung der Ausnehmungen 64 in der Einsteckrichtung 67 abnimmt.

Im Übrigen sind bei dem dritten Ausführungsbeispiel des erfindungsgemäßen Handgriffs diejenigen Elemente, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

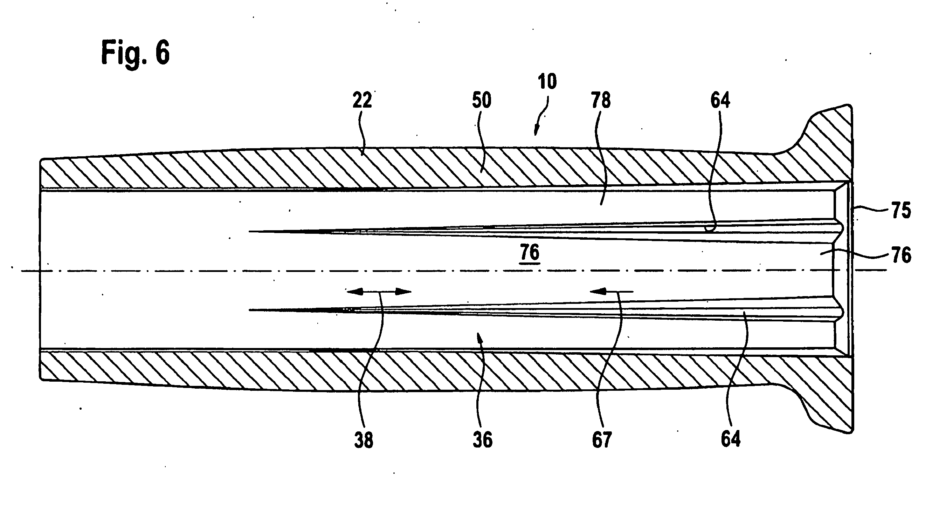

Bei einem vierten Ausführungsbeispiel eines erfindungsgemäßen Handgriffs 10, dargestellt in Fig. 6, sind die Griffhülle 22 und die Stützstruktur 50 ein einziges zusammenhängendes Teil aus weichelastischem Material, so dass in der Stützstruktur 50 der Aufnahmeraum 36 ausgebildet ist, welcher in gleicher Weise, wie beim zweiten Ausführungsbeispiel beschrieben, die Ausnehmungen 64 aufweist, die sich ausgehend von der Einstecköffnung 75 in der Einsteckrichtung 67 in den Aufnahmeraum 36 hineinerstrecken und dabei mit zunehmender Erstreckung in der Einsteckrichtung eine sich verringernde Breite B sowie eine sich verringernde Tiefe und somit insgesamt einen sich verringernden Querschnitt aufweisen.

Im Übrigen sind diejenigen Elemente des vierten Ausführungsbeispiels, die mit denen des voranstehenden Ausführungsbeispiels identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Außerdem ist auch beim vierten Ausführungsbeispiel des erfindungsgemäßen Handgriffs die Ausbildung desselben als beheizten Handgriff möglich, wobei hierzu beispielsweise das vierte Ausführungsbeispiel entsprechend den anderen Ausführungsbeispielen ausgeführt sein kann.

Wie beim ersten Ausführungsbeispiel gemäß Fig. 1 und 2 oder beim zweiten Ausführungsbeispiel gemäß Fig. 3 dargestellt oder bei dem dritten Ausführungsbeispiel gemäß Fig. 4 angedeutet, ist der Handgriff 10 vorzugsweise als heizbarer Handgriff ausgebildet und weist daher eine auf die Griffbasis 12 aufgewickelte Heizwendel 92 auf, welche vorzugsweise zwei parallel zueinander verlaufende Heizdrähte, nämlich einen ersten Heizdraht 94 und einen zweiten Heizdraht 96, umfasst, die wendelförmig, jedoch im Abstand voneinander, auf das Griffrohr 14 aufgewickelt sind und an einem Ende der Heizwendel 92, welches beispielsweise nahe des äußeren Endes 16 des Griffrohrs 14 liegt, an ihren eigenen Enden durch ein U-förmiges Umlenkstück 98 miteinander verbunden sind.

Die Heizdrähte 94, 96 und das Umlenkstück 98 können dabei durch einen durchgehenden Draht gebildet sein, es ist aber auch denkbar als Umlenkstück 98 ein Bauteil vorzusehen, mit dem die Heizdrähte 94, 96 verbunden sind.

Nahe eines anderen Endes der Heizwendel 92 sind die Heizdrähte 94, 96 mit einzelnen Adern 102, 104 einer als Ganzes mit 100 bezeichneten Zuleitung verbunden, die zu einer Stromquelle führt, die einen Strom von einem der Heizdrähte 94, 96 über das Umlenkstück 98 in den anderen der Heizdrähte 96, 94 fließen lässt, um damit im Bereich der Heizdrähte 94, 96 Wärme zu erzeugen.

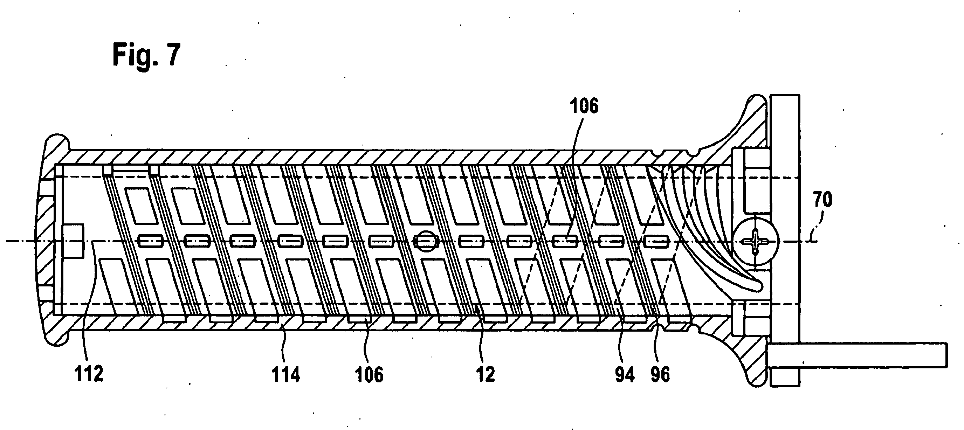

Für die Führung der beiden Heizdrähte 94, 96 im Abstand voneinander sind die unterschiedlichsten Lösungen denkbar. So sind beispielsweise bei einem fünften Ausführungsbeispiel gemäß Fig. 7 an der Griffbasis 12 über das Griffrohr 14 radial nach außen stehende Vorsprünge 106 vorgesehen, welche die Heizdrähte 94, 96 beim Aufwickeln auf die Griffbasis 12 und danach im Abstand voneinander halten. Vorzugsweise sind die Vorsprünge 106 in mehreren in Umfangsrichtung im Abstand voneinander verlaufenden und ungefähr parallel zur Längsmittelachse 70 verlaufenden Reihen 112, 114 angeordnet, so dass die Heizdrähte 94, 96 auf dem Griffrohr 14 sicher fixiert sind. Dies erlaubt es beispielsweise elektrisch nicht isolierte Heizdrähte 94, 96 einzusetzen, da durch die Vorsprünge 106 eine wechselseitige Berührung vor Erreichen des Umlenkstücks 98 verhindert wird.

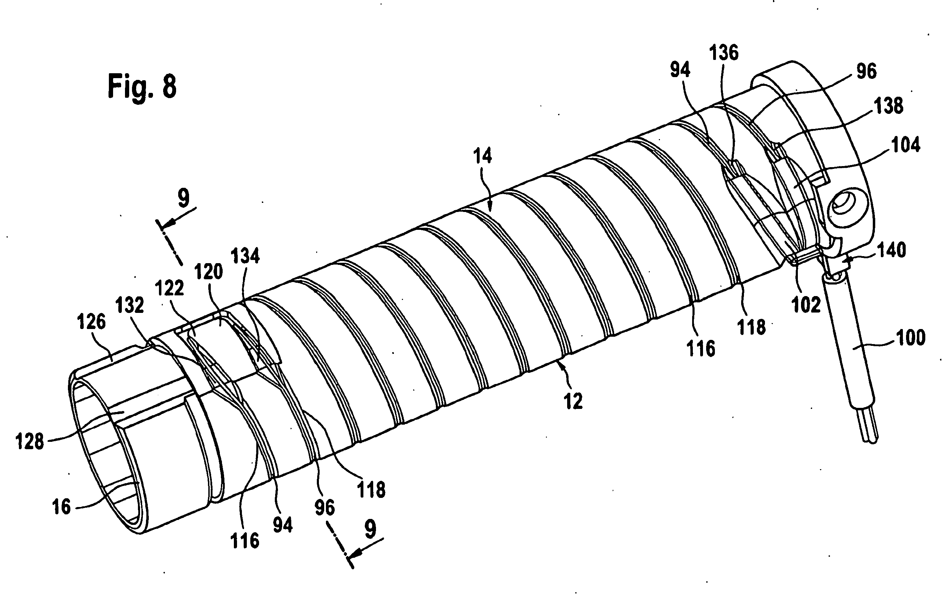

Alternativ zu den beim fünften Ausführungsbeispiel gemäß Fig. 7 dargestellten Vorsprüngen 106 besteht auch die Möglichkeit, wie im Zusammenhang mit dem sechsten Ausführungsbeispiel in Fig. 8 dargestellt, das Griffrohr 14 mit wendelförmig und im Abstand voneinander verlaufenden Nuten 116, 118 zu versehen, in welche dann die Heizdrähte 94, 96 eingelegt werden können.

Bei einer weiteren, allerdings zeichnerisch nicht dargestellten Lösung können am Griffrohr 14 sowohl Nuten 116, 118 als auch Vorsprünge 106 vorgesehen sein.

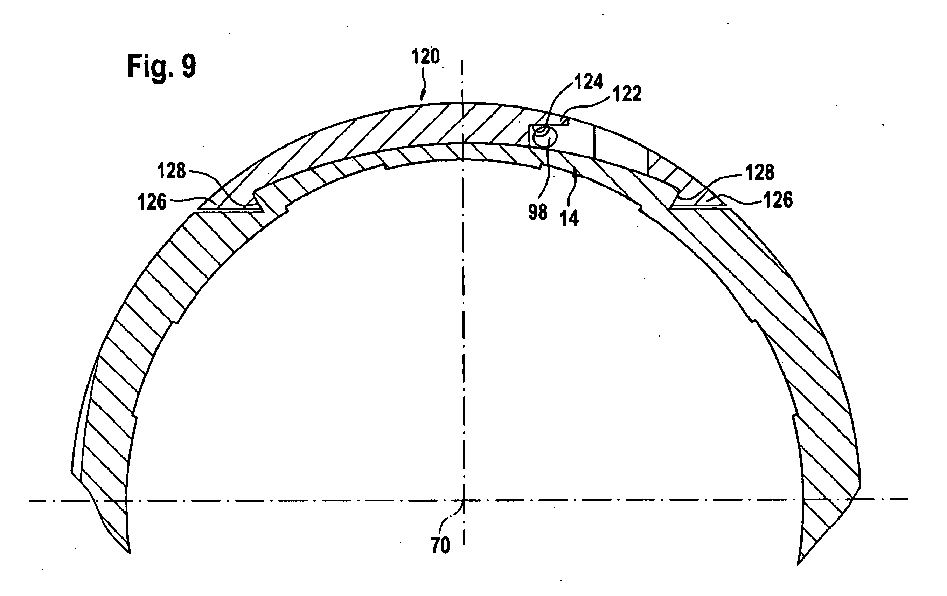

Zur sicheren Festlegung des Umlenkstücks 98 der Heizwendel 92 an dem Griffrohr 14, ist, wie in Fig. 9 dargestellt, ein an dem Griffrohr 14 eine Aufnahme 119 vorgesehen, die entweder am Griffrohr 14 angeformt sein kann oder an einem am Griffrohr 14 fixierbaren Einsatzteil 120 vorgesehen sein kann, welches, wie in Fig. 9 dargestellt, als Aufnahme 119 eine Nase 122 mit einem hinterschnittenen Bereich 124 umfasst, in welchen das Umlenkstück 98 der Heizwendel 92 einlegbar ist, so dass das Umlenkstück 98 zwischen der Nase 122 und dem Griffrohr 14 in den hinterschnittenen Bereich 124 einlegbar ist und somit zwischen Nase 122 und Griffrohr 14 festlegbar ist.

Vorzugsweise ist das Einsatzteil 120, wie in Fig. 9 dargestellt, durch Aufschieben parallel zur Längsmittelachse 70 mit Fußteilen 126 in schwalbenschwanzähnlichen Führungsnuten 128 geführt und ausgehend vom äußeren Ende 16 des Griffrohrs 14 in diesen Führungsnuten 128 geführt auf das Griffrohr 14 soweit aufschiebbar, bis ebenfalls im Einsatzteil 120 im Anschluss an den hinterschnittenen Bereich 124 vorgesehene Nuten 132 und 134 mit den wendelförmig im Griffrohr 14 verlaufenden Nuten 116, 118 fluchten, so dass die Heizdrähte 94, 96 aus den wendelförmigen Nuten 116, 118 in die Nuten 132, 134 eintreten und bis zum Umlenkstück 98 hin verlaufen können.

Durch das Einsatzteil 120 besteht somit in einfacher Weise die Möglichkeit, die Heizwendel 92 beim Aufwickeln auf die Griffbasis 12 sicher zu fixieren.

Eine weitere sichere Fixierung der Heizwendel 92 erfolgt im Bereich von inneren Anschlüssen 136, 138, welche die Heizdrähte 94, 96 mit den Adern 102, 104 der Zuleitung 100 elektrisch leitend verbinden.

Hierzu ist, wie in Fig. 8 dargestellt, an der Griffbasis 12 ein Fixierelement 140 vorgesehen, welches ein Festlegen der Zuleitung 100 mit den Adern 102 und 104 relativ zur Griffbasis 12 erlaubt.

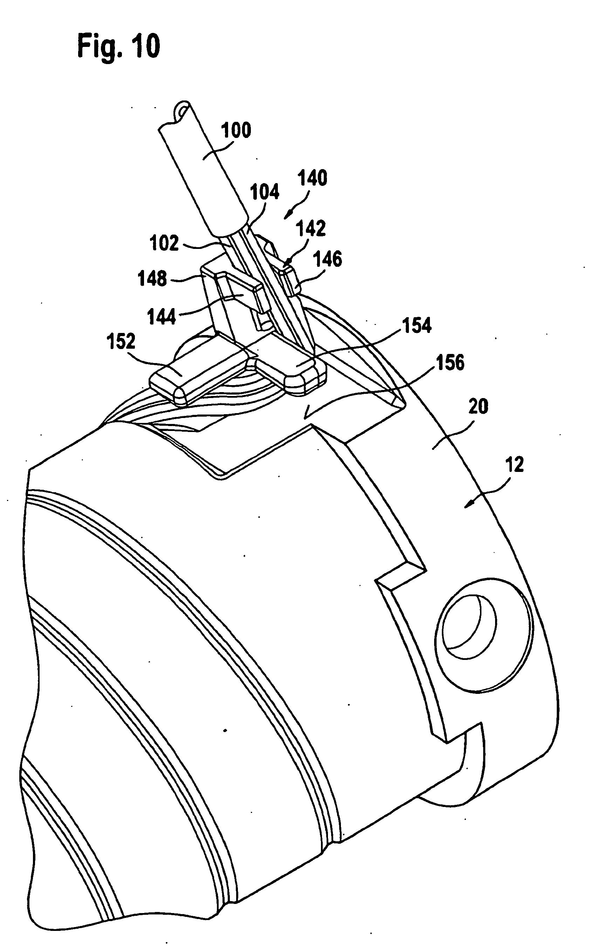

Ein derartiges Fixierelement 140 umfasst, wie in Fig. 10 dargestellt, eine Klemmeinrichtung 142, in welcher die Adern 102, 104 der Zuleitung 100 oder die gesamte Zuleitung zwischen zwei Klemmfingern 144, 146 einklemmbar und damit vor einem Anspritzen der Griffhülle 22 an die Griffbasis 12 fixierbar sind.

Vorzugsweise sitzt dabei die Klemmeinrichtung 142 an einem sich radial von dem Griffrohr 14 wegerstreckenden Sockel 148, der einstückig beispielsweise im Bereich des Griffrohrbundes 20, an die Griffbasis 12 angeformt ist.

An einem Fuß des Sockels 148 sind beispielsweise Niederhaltefinger 152, 154 vorgesehen, die im Abstand von einer Anlagefläche 156 der Griffbasis 12 verlaufen und die Adern 102, 104 zwischen sich und der Anlagefläche 156, insbesondere auf der Anlagefläche 156 anliegend, fixieren, wobei gleichzeitig der Niederhaltefinger 154 eine Umlenkung für die Adern 102, 104 bildet, die zunächst radial zur Längsmittelachse 70 verlaufend sich von der Klemmeinrichtung 142 bis zur Anlagefläche 156 erstrecken und dann parallel zur Anlagefläche 156 verlaufen und durch den Niederhaltefinger 154 umgelenkt werden, während der Niederhaltefinger 152 die Adern 102, 104 noch zusätzlich in Anlage an der Auflagefläche 156 des Griffrohrs 14 hält.

Die Niederhaltefinger 152, 154 können aber auch zu einem Niederhaltefinger zusammengefasst werden

Beim Umspritzen einer Griffbasis 12 mit dem Fixierelement 140 erfolgt ein Einbetten desselben in die Griffhülle 22, insbesondere in den inneren Führungsring 34, so dass das Fixierelement 140 insgesamt nicht mehr sichtbar ist.

Außerdem erfolgt in Fortsetzung des inneren Führungsrings 34 das Anformen eines Knickschutzes 160, welcher die Zuleitung 100 noch ausgehend von dem inneren Führungsring 34 über eine gewisse Strecke umschließt, um die Zuleitung 100 beim Austritt aus dem inneren Führungsring 34 noch zusätzlich zu schützen.

Insbesondere ist dabei der Knickschutz 160 aus demselben weichelastischen Material ausgebildet wie die Griffhülle 22 und wird mit dieser in einem Spritzgang angeformt.

Günstigerweise ist auch ein Außenmantel 101 der Zuleitung 100 aus demselben Basismaterial, noch besser demselben Material, wie der Knickschutz 160 hergestellt, so dass sich diese gut und sicher, sowie insbesondere auch gas- und/oder flüssigkeitsdicht miteinander verbinden.

Eine besonders vorteilhafte Lösung sieht vor, dass auch die Adernmäntel 103, 105 der einzelnen Adern 102, 104 aus demselben Basismaterial noch besser demselben Material, wie der Knickschutz 160 sind.

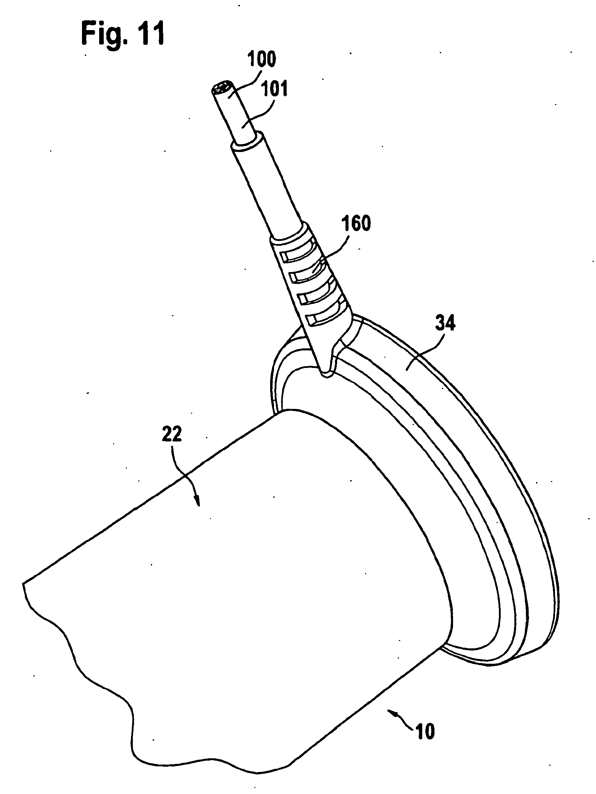

Die Zuleitung 100 bildet bei dem sechsten Ausführungsbeispiel gemäß Fig. 10 und 11 einen radial zur Längsmittelachse 70 verlaufenden Abgang, da die Zuleitung 100 durch das Fixierelement 140 radial zur Mittelachse 70 geführt ist.

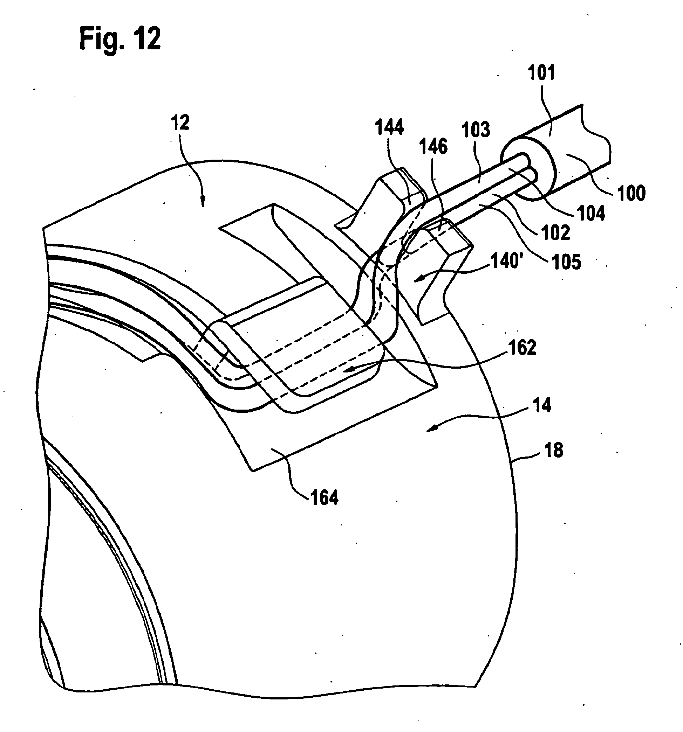

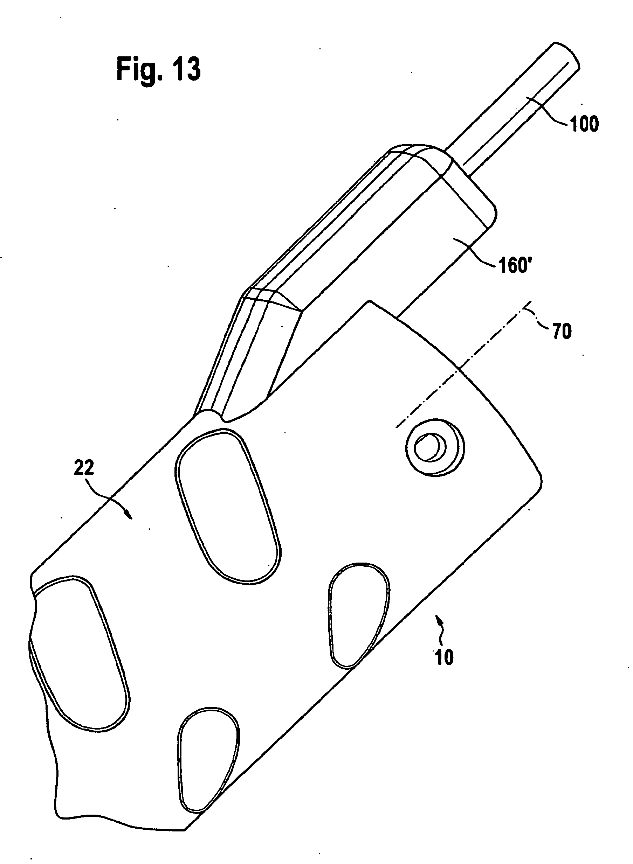

Alternativ dazu ist bei einem siebten, in Fig. 12 und 13 dargestellten Ausführungsbeispiel ein axialer Abgang dargestellt, bei welchem die Adern 102, 104 der Zuleitung 100 durch das Fixierelement 140' ungefähr parallel zur Längsmittelachse 70 ausgerichtet gehalten werden, wobei das Fixierelement 140' ebenfalls zwei Klemmfinger 144, 146 umfasst, die allerdings ohne Sockel 148 an das Griffrohr 14 im Bereich von dessen innerem Ende 18 angeformt sind.

Ferner ist von den Klemmfingern 144, 146 getrennt noch ein Niederhalter 162 vorgesehen, welcher die Adern 102, 104 zwischen sich und einer dem Niederhalter 162 zugeordneten Auflagefläche 164 am Griffrohr 14 anliegend hält, so dass sich dann die Adern 102, 104 ausgehend von dem Niederhalter 162 zu den bereits beschriebenen inneren Anschlüssen 136, 138 erstrecken können.

Das Umspritzen der Griffbasis 12 ergibt auch bei diesem Ausführungsbeispiel ebenfalls einen Knickschutz 160', welcher sich allerdings bei diesem Ausführungsbeispiel ungefähr parallel zur Längsmittelachse 70 des Handgriffs 10 erstreckt und ebenfalls das Fixierelement 140 vollständig einbettet.

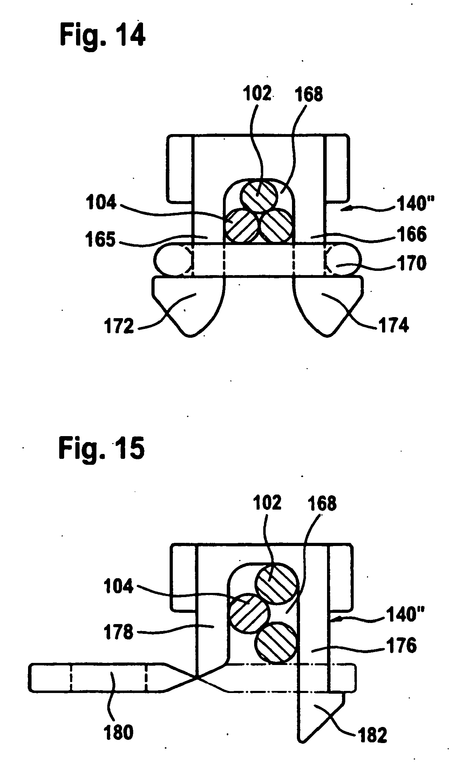

Alternativ zu den Fixierelementen 140 und 140', die zwei Klemmfinger 144 und 146 aufweisen, zwischen denen die Adern 102 und 104 einklemmbar sind, ist bei einem Fixierelement 140" gemäß einem in Fig. 14 dargestellten achten Ausführungsbeispiel des erfindungsgemäßen Handgriffs vorgesehen, dass anstatt der beiden Klemmfinger 144 und 146 zwei Hakenfinger 165, 166 vorgesehen sind, zwischen denen ein Zwischenraum 168 angeordnet ist, in welchen die Adern 102, 104 der Zuleitung 100 einlegbar sind, wobei auf die Hakenfinger 165 und 166 ein elastisches Verschlusselement 170 aufschiebbar ist, welches Haken 172, 174 der Hakenfinger 165, 166 hintergreift, dadurch die Adern 102, 104 im Zwischenraum 168 beaufschlagt und somit kraftschlüssig zwischen den Hakenfingern 165 und 166 und dem Verschlusselement 170 festlegt.

Ein Fixierelement 140" gemäß einem in Fig. 15 dargestellten neunten Ausführungsbeispiel sieht vor, dass dieses lediglich einen Hakenfinger 176 aufweist und einen weiteren Finger 178, an welchem eine Verschlussklappe 180 gelenkig angeordnet ist, die den Zwischenraum 168 endseitig der Finger 176, 178 verschließt und durch Hintergreifen eines Hakens 182 des Hakenfingers 176 an diesem festlegbar ist, so dass durch die Verschlussklappe 180 ebenfalls die Adern 102, 104 in dem Zwischenraum festlegbar sind.

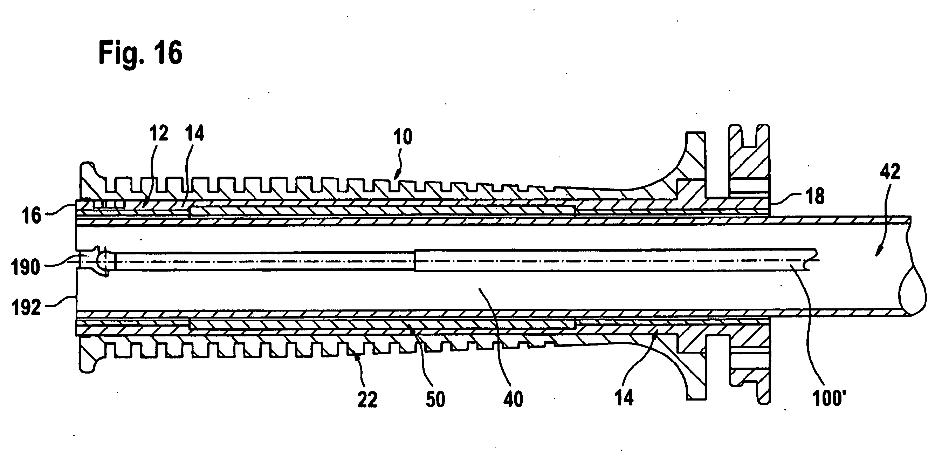

Alternativ zu den bislang beschriebenen Ausführungsbeispielen ist bei einem zehnten Ausführungsbeispiel eines erfindungsgemäßen Handgriffs, dargestellt in Fig. 16, anstelle der nach außen geführten Zuleitung 100 ein sogenannter innerer Abgang vorgesehen, bei welchem die Zuleitung 100' durch einen Innenraum des Griffstücks 40 und des Lenkers 42 geführt ist, wobei hierzu das Griffstück 40 eine Aussparung 190 im Bereich eines äußeren Endes 192 desselben aufweist, durch welche die Zuleitung 100 vom Innenraum des Griffstücks 40 durch die Aussparung 190 hindurch zu dem Handgriff 10, und insbesondere zu dem äußeren Ende 16 des Griffrohrs 14 der Griffbasis 12 geführt werden kann, an welcher die Zuleitung 100 in beliebiger Weise festlegbar ist.

Somit liegt bei diesem zehnten Ausführungsbeispiel das Umlenkstück 98 der Heizwendel 92 nahe dem inneren Ende 18 des Griffrohrs 14.

Für den Fall, dass der Handgriff gemäß dem zehnten Ausführungsbeispiel als Gasgriff ausgebildet ist, wird dieser drehbar auf einer Hülse montiert, die ihrerseits fest auf dem Lenker 42 sitzt. Diese Hülse kann beispielsweise die Stützstruktur 50 ersetzen, so dass das Griffrohr 14 gegenüber dieser Hülse 50 drehbar ist.

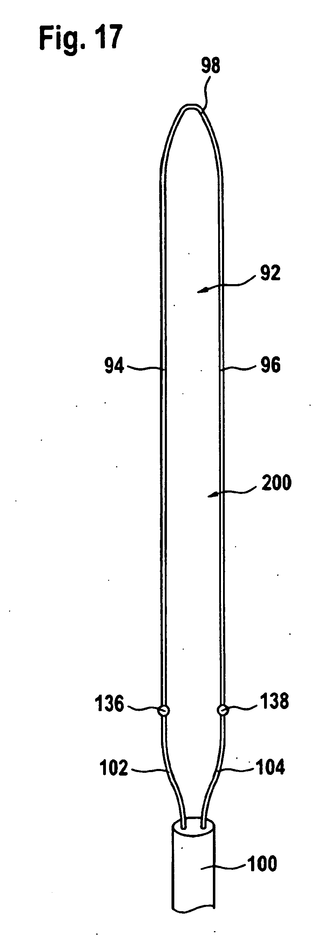

Im Zusammenhang mit der bisherigen Beschreibung der einzelnen Ausführungsbeispiele wurde lediglich dargelegt, dass die Heizwendel 92, wie vereinfacht in Fig. 17 dargestellt, zwei Heizdrähte, nämlich die Heizdrähte 94 und 96 aufweisen soll, die im Abstand voneinander auf die Griffbasis 12 aufgewickelt und an dieser fixiert sein sollen, wobei die beiden Heizdrähte 94, 96 bis zu dem U-förmigen Umlenkstück 98 verlaufen sollten.

Damit hat ein derartiger Handgriff 10 lediglich eine einzige Heizschleife 200, in welcher Strom zum Heizen desselben fließt.

Um unterschiedliche Heizleistungen zu erreichen, ist es daher erforderlich, den Strom in der Heizschleife 200 zu steuern.

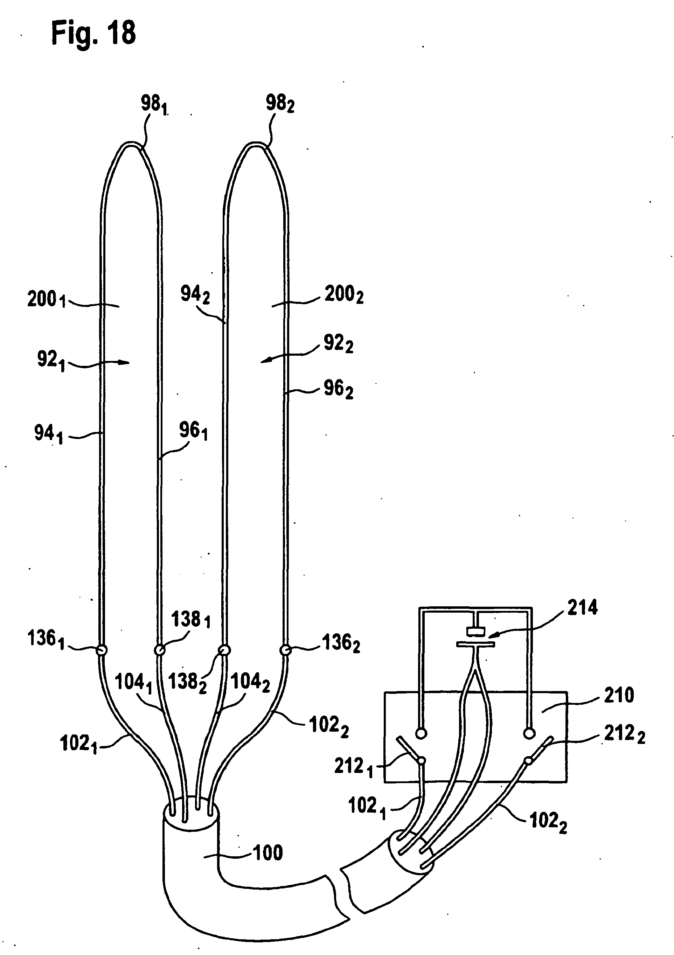

Eine vereinfachte Möglichkeit zur Heizung des Handgriffs 10 gemäß einem elften Ausführungsbeispiel sieht, wie in Fig. 18 dargestellt, an derselben Griffbasis 12 zwei Heizschleifen 200₁ und 200₂ vor, von denen sich jede von den inneren Anschlüssen 136₁ und 138₁ bzw. 136₂ und 138₂ ausgehend erstreckt und über Adern 102₁und 104₁ bzw. 102₂ und 104₂ der Zuleitung 100 in Parallelschaltung von einer Stromquelle 214 gespeist werden kann.

Damit besteht die Möglichkeit, durch eine einfache Schalteinrichtung 210 beispielsweise mit den Adern 102₁ und 102₂ zugeordneten Schaltern 212₁ und 212₂ derselben, die einzelnen Heizschleifen 200₁ und 200₂ einzeln mit der Stromquelle 214 zu verbinden und somit im Handgriff 10 beide Heizschleifen 200₁ und 200₂ zu aktivieren oder nur eine derselben.

Hat dabei eine der Heizschleifen 200₁ und 200₂ eine Heizleistung, die sich von der Heizleistung der anderen Heizschleife unterscheidet, beispielsweise die Hälfte beträgt, so ist durch Schließen beider Schalter 212₁ und 212₂ als maximale Heizleistung die Summe der Heizleistungen der Heizschleifen 200₁, 200₂ erreichbar, durch Schließen desjenigen der Schalter 212₁ und 212₂, der die Heizschleife 200₁ oder 200₂ mit der größeren Heizleistung ansteuert die größere Heizleistung, beispielsweise eine Heizleistung von zwei Drittel der maximalen Heizleistung, realisierbar und durch Schließen desjenigen der Schalter 212₂ oder 212₁, der die Heizschleife 200₂ oder 200₁ mit der geringeren Heizleistung ansteuert, die geringere Heizleistung, beispielsweise eine Heizleistung von einem Drittel der maximalen Heizleistung, erzielbar, so das insgesamt durch Vorsehen lediglich zweier Schalter 212₁ und 212₂ insgesamt eine Heizbarkeit des Handgriffs 10 mit insgesamt drei Heizleistungsstufen realisierbar ist.

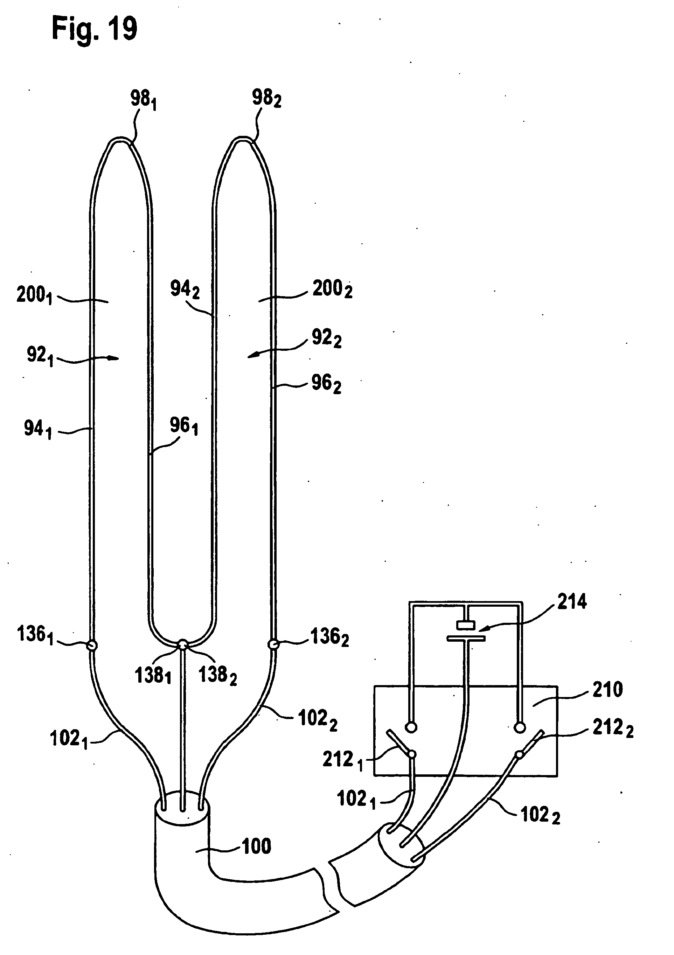

Das elfte Ausführungsbeispiel gemäß Fig. 18 lässt sich auch noch dadurch vereinfachen, dass, wie bei dem zwölften Ausführungsbeispiel in Fig. 19 dargestellt, die beiden Adern 104₁ und 104₂ durch eine einzige Ader 104 ersetzt werden können, die - wenn notwendig - einen entsprechend angepassten Leitungsquerschnitt aufweisen können.

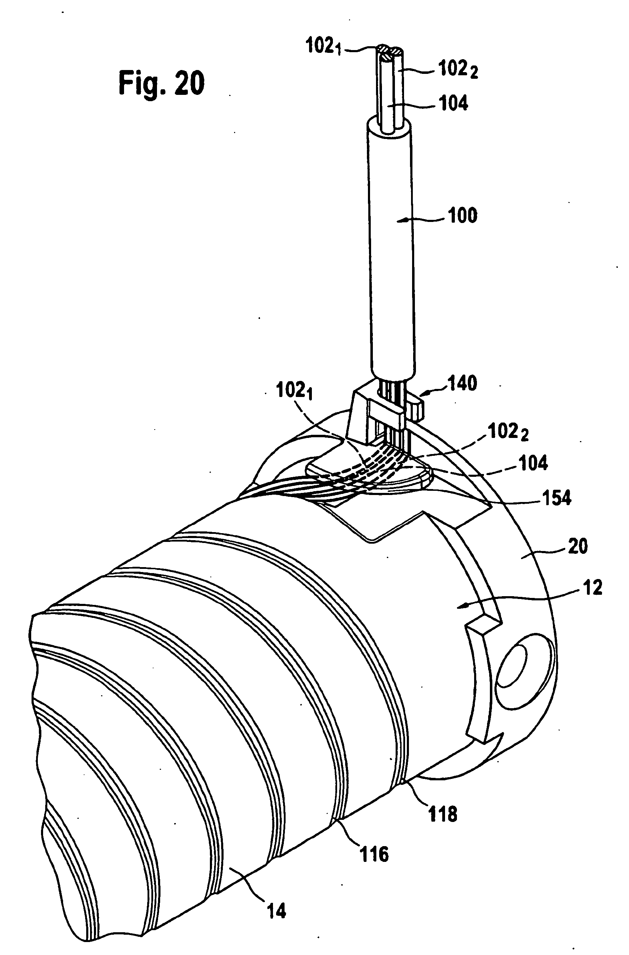

Bei dem zwölften Ausführungsbeispiel gemäß Fig. 19 liegen beispielsweise - wie in Fig. 20 dargestellt - die beiden Heizschleifen 200₁ und 200₂ so in den Nuten 116, 118 dass die ersten Heizdrähte 94₁ und 94₂ sowie die zweiten Heizdrähte 96₁ und 96₂ nebeneinander liegen und die Umlenkstücke 98₁ und 98₂ in derselben Aufnahme 119 an der Griffbasis 12 fixiert sind.

In diesem Fall sind die ersten Heizdrähte 94₁, 96₁ und die zweiten Heizdrähte 94₂ und 96₂ sowie die Umlenkstücke 98₁ und 98₂ gegeneinander elektrisch isoliert, vorzugsweise durch Verwendung von Drähten mit einer Lackisolierung.

Dieselbe Art der Anordnung der Heizwendeln 92₁ und 92₂ ist auch bei auf der Griffbasis 12 vorgesehenen Vorsprüngen 106 zur Trennung der Heizdrähte 94, 96 möglich.

In gleicher Weise können auch die Heizdrähte 94, 96 der Heizschleifen 200₁ und 200₂ gemäß dem elften Ausführungsbeispiel angeordnet werden.

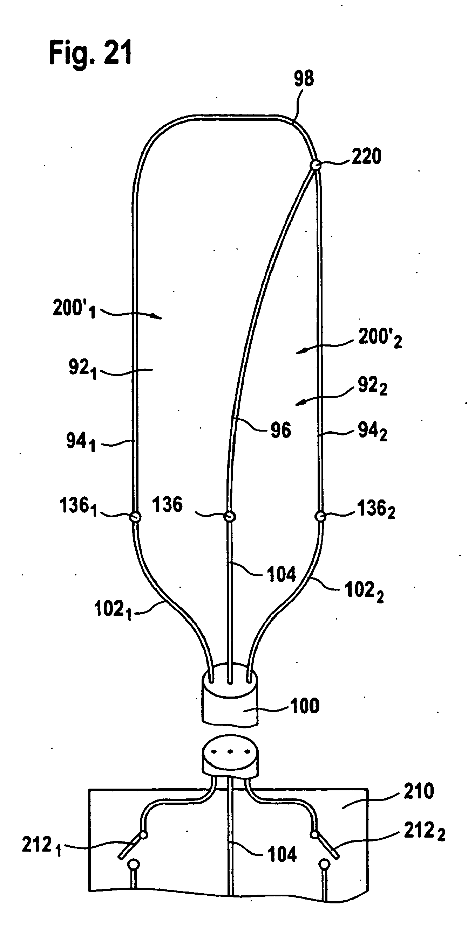

Eine weitere Möglichkeit, mehrere Heizschleifen 200'₁ und 200'₂ zu realisieren sieht, wie bei einem dreizehnten Ausführungsbeispiel in Fig. 21 dargestellt vor, von den inneren Anschlüssen 136₁ und 136₂ zwei Heizdrähte 94₁ und 94₂ zu einer Zwischenanzapfung 220 zu führen, von welcher ein einziger Heizdraht 96 zu dem inneren Anschluss 136 führt. Die zu den inneren Anschlüssen 136₁ und 136₂ geführten Adern 102₁ und 102₂ der Zuleitung 100 sind wiederum mit den Schaltern 212₁ und 212₂ der Schalteinrichtung 210 verbunden, so dass ebenfalls in der beschriebenen Art und Weise durch Schließen entweder beider Schalter 212₁ und 212₂ beide Heizschleifen 200'₁ und 200'₂ bestrombar sind, oder durch Schließen von einem der Schalter 212₁ und 212₂ eine der beiden Heizschleifen 200'₁ und 200'₂.

Je nach Lage der Zwischenanzapfung 220 lässt sich somit die Heizleistung der Heizschleifen 200'₁ und 200'₂ bei der Herstellung des Handgriffs 10 festlegen und somit auch festlegen, welche Heizleistung beim Schließen beider Schalter 212₁und 212₂ oder eines der Schalter 212₁ und 212₂ für das Heizen des Handgriffs 10 zur Verfügung stehen soll.

## Patentansprüche

1. Handgriff für lenkergeführte Fahrzeuge, umfassend eine Griffhülle (22) aus einem Griffhüllenmaterial und einen sich von einer Einstecköffnung (75) mit seiner Längsausdehnung (38) in einer Einsteckrichtung (67) für ein Griffstück (40) des Lenkers (42) erstreckenden Aufnahmeraum (36), welcher mindestens ein Wandsegment aufweist, welches mindestens eine an eine Außenfläche (68) des Griffstücks (40) angepasste Teilflächen (76, 78) aufweisende Anlagefläche umfasst,
**dadurch gekennzeichnet, dass** das Wandsegment mindestens eine zwischen den Teilflächen angeordnete, sich ungefähr parallel zu der Einsteckrichtung (67) erstreckende Ausnehmung (64, 66) als Klebstoffreservoir aufweist und dass die Ausnehmung (64, 66) eine mit zunehmender Erstreckung derselben in der Einsteckrichtung (67) sich verringernde Breite (B) in Umfangsrichtung des Griffstücks (40) aufweist.

2. Handgriff nach Anspruch 1, **dadurch gekennzeichnet, dass** die Ausnehmung (64, 66) eine mit zunehmender Erstreckung derselben in der Einsteckrichtung (67) sich verringernde Tiefe radial zum Griffstück (40) aufweist.

3. Handgriff nach einem der voranstehenden Ansprüche, **dadurch gekennzeichnet, dass** die Ausnehmung (64, 66) stufenfrei in die sich an diese anschließende Teilfläche (76, 78) übergeht.

4. Handgriff nach einem der voranstehenden Ansprüche, **dadurch gekennzeichnet, dass** die Ausnehmung (64, 66) mit einer mit einem spitzen Winkel (α) zu der sich anschließenden Teilfläche (76, 78) der Auflagefläche (52) verlaufenden Seitenwand (83, 84) versehen ist.

5. Handgriff nach Anspruch 4, **dadurch gekennzeichnet, dass** die Ausnehmung (64, 66) beidseitig mit einer derart verlaufenden Seitenwand (83, 84) versehen ist.

6. Handgriff nach einem der voranstehenden Ansprüche, **dadurch gekennzeichnet, dass** sich die Ausnehmung (64, 66) im Wesentlichen über die gesamte Längsausdehnung des Aufnahmeraums erstreckt.

7. Handgriff nach dem Oberbegriff des Anspruchs 1 oder nach einem der voranstehenden Ansprüche, **dadurch gekennzeichnet, dass** mindestens ein Wandsegment des Aufnahmeraums (36) mit einer an eine Außenfläche (68) des Griffstücks (40) angepasste Teilflächen (76, 78) aufweisenden Auflagefläche (52) und einem sich über die Auflagefläche (52) erhebenden Distanzelement versehen ist, welches zwischen den Teilflächen (76, 78) und einer Außenfläche (68) des Griffstücks (40) einen Spaltraum (91) zur Aufnahme einer Klebstoffschicht (90) schafft.

8. Handgriff nach Anspruch 7, **dadurch gekennzeichnet, dass** das Distanzelement (85) als sich in Einsteckrichtung (67) erstreckender Wulst ausgebildet ist.

9. Handgriff nach Anspruch 7 oder 8, **dadurch gekennzeichnet, dass** das Distanzelement (85) sich zusammenhängend von der Einstecköffnung (75) zu einem Ende des Aufnahmeraums (36) erstreckt.

10. Handgriff nach einem der Ansprüche 7 bis 9, **dadurch gekennzeichnet, dass** das Distanzelement (85) sich im Wesentlichen über die gesamte Längsausdehnung (38) des Aufnahmeraums (36) erstreckt.

11. Handgriff nach einem der voranstehenden Ansprüche, **dadurch gekennzeichnet, dass** zwischen dem Distanzelement (85) und der Ausnehmung (64, 66) eine Teilfläche (76, 78) der Auflagefläche (52) liegt.

12. Handgriff nach Anspruch 11, **dadurch gekennzeichnet, dass** beiderseits der jeweiligen Ausnehmung (64, 66) ein Distanzelement (85) vorgesehen ist.

13. Handgriff nach Anspruch 11 oder 12, **dadurch gekennzeichnet, dass** zwischen der Ausnehmung (64, 66) und den beiderseits derselben liegenden Distanzelementen (85) Teilflächen (76, 78) der Auflagefläche (52) vorgesehen sind.

14. Handgriff nach dem Oberbegriff des Anspruchs 1 oder nach einem der voranstehenden Ansprüche, **dadurch gekennzeichnet, dass** der Handgriff (10) eine Griffbasis (12), und die die Griffbasis (12) überdeckende Griffhülle (22) aufweist und dass an die Griffbasis (12) eine Stützstruktur (50) aus deformierbarem Material im Bereich des Aufnahmeraums (36) angeformt ist, mit welcher die Griffbasis (12) an dem Griffstück (40) des Lenkers (42) abstützbar ist.

15. Handgriff nach Anspruch 14, **dadurch gekennzeichnet, dass** die Stützstruktur (50) an die Griffbasis (12) durch Anspritzen angeformt ist.

16. Handgriff nach Anspruch 14 oder 15, **dadurch gekennzeichnet, dass** das deformierbare Material einem Griffhüllenmaterial entspricht.

17. Handgriff nach Anspruch 16, **dadurch gekennzeichnet, dass** die Griffhülle (22) durch Umspritzen der Griffbasis (12) mit dem Griffhüllenmaterial an die Griffbasis (12) angeformt ist und dass die Stützstruktur (50) in einem Spritzvorgang zusammen mit der Griffhülle (22) an die Griffbasis (12) angeformt ist.

18. Handgriff nach einem der Ansprüche 14 bis 17, **dadurch gekennzeichnet, dass** die Stützstruktur (50) mit der Griffhülle (22) durch die Griffbasis (12) durchsetzende Durchbrüche (56) unmittelbar verbunden ist.

19. Handgriff nach Anspruch 18, **dadurch gekennzeichnet, dass** die Stützstruktur (50) durch beim Spritzen der Griffhülle (22) durch die Durchbrüche (56) in der Griffbasis (12) hindurchtretendes Griffhüllenmaterial gebildet ist.

20. Handgriff nach einem der Ansprüche 14 bis 19, **dadurch gekennzeichnet, dass** die Stützstruktur (50) eine aufgrund elastischer Deformation derselben an einer Oberfläche des Griffstücks (40) flächenhaft anlegbare Auflagefläche (52) aufweist.

21. Handgriff nach einem der Ansprüche 14 bis 20, **dadurch gekennzeichnet, dass** die Stützstruktur (50) aus Teilbereichen (72, 74) gebildet ist, die durch Ausnehmungen (64, 66) zumindest teilweise voneinander getrennt sind.

22. Handgriff nach Anspruch 21, **dadurch gekennzeichnet, dass** die Auflagefläche (52) der Stützstruktur (50) durch die Ausnehmungen (64, 66) in der Stützstruktur (50) in Teilflächen (76, 78) aufgeteilt ist.

23. Handgriff nach Anspruch 21 oder 22, **dadurch gekennzeichnet, dass** die Ausnehmungen (64, 66) die Stützstruktur (50) von der Auflagefläche (52) bis zur Griffbasis (12) durchsetzen.

24. Handgriff nach einem der Ansprüche 21 bis 23, **dadurch gekennzeichnet, dass** die Ausnehmungen (64, 66) langgestreckt und ungefähr parallel zu einer Längsmittelachse (70) der Griffbasis (12) verlaufen.

25. Handgriff nach einem der Ansprüche 21 bis 24, **dadurch gekennzeichnet, dass** die Auflagefläche (52) nur auf Teilflächenbereichen der Oberfläche (68) des Griffstücks (40) aufliegt.

26. Handgriff nach einem der Ansprüche 14 bis 25, **dadurch gekennzeichnet, dass** die Stützstruktur (50) insgesamt eine Griffstückaufnahme (54) für das Griffstück (40) bildet.

27. Handgriff nach einem der Ansprüche 14 bis 26, **dadurch gekennzeichnet, dass** die Griffbasis (12) mit dem Griffstück (40) über ein Halteelement (80) formschlüssig verbindbar ist.

28. Handgriff nach einem der Ansprüche 14 bis 26, **dadurch gekennzeichnet, dass** die Griffbasis (12) über die Stützstruktur (50) mit dem Griffstück (40) verbindbar ist.

29. Handgriff nach Anspruch 28, **dadurch gekennzeichnet, dass** die Stützstruktur (50) stoffschlüssig mit dem Griffstück (40) verbindbar ist.

30. Handgriff nach dem Oberbegriff des Anspruchs 1 oder nach einem der voranstehenden Ansprüche, **dadurch gekennzeichnet, dass** der Handgriff (10) elektrisch beheizbar ist.

31. Handgriff nach Anspruch 30, **dadurch gekennzeichnet, dass** die Griffbasis (12) mit mindestens eine Heizschleife (200) bildenden Heizdrähten (94, 96) versehen ist.

32. Handgriff nach Anspruch 31, **dadurch gekennzeichnet, dass** die Heizdrähte (94, 96) mindestens eine Heizwendel (92) bilden.

33. Handgriff nach Anspruch 30 oder 31, **dadurch gekennzeichnet, dass** die die Heizschleife (200) bildenden Heizdrähte (94, 96) endseitig durch ein Umlenkstück (98) verbunden sind.

34. Handgriff nach Anspruch 33, **dadurch gekennzeichnet, dass** die Heizdrähte (94, 96) und das Umlenkstück (98) durch einen einstückigen Draht gebildet sind.

35. Handgriff nach einem der Ansprüche 32 bis 34, **dadurch gekennzeichnet, dass** die Heizwendel (92) endseitig an der Griffbasis (12) fixierbar ist.

36. Handgriff nach Anspruch 35, **dadurch gekennzeichnet, dass** die Heizwendel (92) endseitig in einer Aufnahme (119) an der Griffbasis fixierbar ist.

37. Handgriff nach Anspruch 35 oder 36, **dadurch gekennzeichnet, dass** die Heizwendel (92) mit dem Umlenkstück (98) an der Griffbasis (12) endseitig fixierbar ist.

38. Handgriff nach einem der Ansprüche 35 oder 36, **dadurch gekennzeichnet, dass** die Heizwendel (92) endseitig über ein an der Griffbasis (12) fixierbares Einsatzteil (120) an der Griffbasis (12) fixierbar ist.

39. Handgriff nach Anspruch 38, **dadurch gekennzeichnet, dass** das Einsatzteil (120) die Aufnahme (124) für das Umlenkstück (98) der Heizwendel (92) aufweist.

40. Handgriff nach Anspruch 38 oder 39, **dadurch gekennzeichnet, dass** das Einsatzteil (120) an der Griffbasis (12) durch an jedes derselben angeformte Formschlusselemente (126, 128) fixierbar ist.

41. Handgriff nach einem der Ansprüche 30 bis 40, **dadurch gekennzeichnet, dass** die Zuleitung (100) in einem Fixierelement (140) der Griffbasis (12) fixierbar ist.

42. Handgriff nach Anspruch 41, **dadurch gekennzeichnet, dass** die Zuleitung (100) durch das Fixierelement (140) kraftschlüssig gehalten ist.

43. Handgriff nach Anspruch 42, **dadurch gekennzeichnet, dass** die Zuleitung (100) durch das Fixierelement (140) geklemmt ist.

44. Handgriff nach einem der Ansprüche 41 oder 42, **dadurch gekennzeichnet, dass** das Fixierelement (140) in die Griffhülle (22) eingebettet ist.

45. Handgriff nach einem der Ansprüche 30 bis 44, **dadurch gekennzeichnet, dass** an die Griffhülle (22) ein Knickschutz (160) für eine Zuleitung (100) angeformt ist.

46. Handgriff nach dem Oberbegriff des Anspruchs 1 oder nach einem der voranstehenden Ansprüche 30 bis 45, **dadurch gekennzeichnet, dass** in dem Handgriff (10) mehrere Heizschleifen (200) vorgesehen sind.

47. Handgriff nach Anspruch 46, **dadurch gekennzeichnet, dass** die Heizschleifen (200) unterschiedliche Heizleistungen aufweisen.

48. Handgriff nach Anspruch 46 oder 47, **dadurch gekennzeichnet, dass** die mehreren Heizschleifen (200) in einer Parallelschaltung angeordnet sind.

49. Handgriff nach einem der Ansprüche 46 bis 48, **dadurch gekennzeichnet, dass** den mehreren Heizschleifen (200) eine Schalteinrichtung (210) zugeordnet ist mit welcher einzelne oder mehrere Heizschleifen (200) zuschaltbar sind.

50. Handgriff nach einem der Ansprüche 46 bis 49, **dadurch gekennzeichnet, dass** die mehreren Heizschleifen (200) aus elektrisch isolierten elektrischen Leitungen (94, 96, 98) gebildet sind.

51. Handgriff nach Anspruch 50, **dadurch gekennzeichnet, dass** die elektrischen Leitungen (94, 96, 98) lackisoliert sind.

52. Handgriff nach einem der Ansprüche 46 bis 51, **dadurch gekennzeichnet, dass** die mehreren Heizschleifen (200) endseitig in derselben an der Griffbasis (12) vorgesehenen Aufnahme (119) fixierbar sind.

53. Handgriff nach einem der Ansprüche 46 bis 52, **dadurch gekennzeichnet, dass** die mehreren Heizschleifen (200) mit nebeneinander verlaufenden Heizdrähten (94, 96) an der Griffbasis (12) angeordnet sind.

54. Handgriff nach einem der Ansprüche 46 bis 53, **dadurch gekennzeichnet, dass** die jeweiligen ersten und zweiten Heizdrähte (94, 96) der Heizschleifen (200) in denselben Nuten (116, 118) verlaufen.

55. Handgriff nach einem der Ansprüche 46 bis 54, **dadurch gekennzeichnet, dass** die jeweiligen ersten und zweiten Heizdrähte (94, 96) der mehreren Heizschleifen (200) zwischen denselben Vorsprüngen (106) verlaufen.

## Claims

1. Hand grip for handlebar-steered vehicles, comprising a grip covering (22), made of a grip-covering material, and an accommodating space (36) which extends, by way of its longitudinal extent (38), from a plug-in opening (75) in a plug-in direction (67) for a grip component (40) of the handlebar (42), the accommodating space having at least one wall segment which comprises at least one abutment surface having surface sub-regions (76, 78) that are adapted to an outer surface (68) of the grip component (40), **characterized in that** the wall segment has, as an adhesive reservoir, at least one recess (64, 66) disposed between the surface sub-regions and extending approximately parallel to the plug-in direction (67), and **in that** the recess (64, 66) has a width (B), as seen in the circumferential direction of the grip component (40), which decreases as the recess extends further in the plug-in direction (67).

2. Hand grip according to Claim 1, **characterized in that** the recess (64, 66) has a depth, as seen radially in relation to the grip component (40), which decreases as the recess extends further in the plug-in direction (67).

3. Hand grip according to either of the preceding claims, **characterized in that** the recess (64, 66) merges in a step-free manner into the surface sub-region (76, 78) adjoining it.

4. Hand grip according to any of the preceding claims, **characterized in that** the recess (64, 66) is provided with a side wall (83, 84) which runs at an acute angle (α) in relation to the adjoining surface sub-region (76, 78) of the bearing surface (52).

5. Hand grip according to Claim 4, **characterized in that** the recess (64, 66) is provided on both sides with a side wall (83, 84) which runs in the way described.

6. Hand grip according to any of the preceding claims, **characterized in that** the recess (64, 66) extends substantially over the entire longitudinal extent of the accommodating space.

7. Hand grip according to the preamble of Claim 1 or according to any of the preceding claims, **characterized in that** at least one wall segment of the accommodating space (36) is provided with a bearing surface (52), the bearing surface having surface sub-regions (76, 78) adapted to an outer surface (68) of the grip component (40), and with a spacer element, which rises up above the bearing surface (52) and creates a gap (91) for accommodating an adhesive layer (90) between the surface sub-regions (76, 78) and an outer surface (68) of the grip component (40).

8. Hand grip according to Claim 7, **characterized in that** the spacer element (85) is in the form of a bead extending in the plug-in direction (67).

9. Hand grip according to Claim 7 or 8, **characterized in that** the spacer element (85) extends continuously from the plug-in opening (75) to one end of the accommodating space (36).

10. Hand grip according to any of Claims 7 to 9, **characterized in that** the spacer element (85) extends substantially over the entire longitudinal extent (38) of the accommodating space (36).

11. Hand grip according to any of the preceding claims, **characterized in that** a surface sub-region (76, 78) of the bearing surface (52) is located between the spacer element (85) and the recess (64, 66).

12. Hand grip according to Claim 11, **characterized in that** a spacer element (85) is provided on both sides of the respective recess (64, 66).

13. Hand grip according to Claim 11 or 12, **characterized in that** surface sub-regions (76, 78) of the bearing surface (52) are provided between the recess (64, 66) and the spacer elements (85) located on both sides of the recess.

14. Hand grip according to the preamble of Claim 1 or according to any of the preceding claims, **characterized in that** the hand grip (10) has a grip base (12) and the grip covering (22), which covers over the grip base (12), and **in that** a supporting structure (50) made of deformable material is integrally formed on the grip base (12) in the region of the accommodating space (36) and allows the grip base (12) to be supported on the grip component (40) of the handlebar (42).

15. Hand grip according to Claim 14, **characterized in that** the supporting structure (50) is integrally formed on the grip base (12) by injection moulding.

16. Hand grip according to Claim 14 or 15, **characterized in that** the deformable material corresponds to a grip-covering material.

17. Hand grip according to Claim 16, **characterized in that** the grip covering (22) is integrally formed on the grip base (12) by virtue of the grip base (12) being encapsulated by the grip-covering material using injection moulding, and **in that** the supporting structure (50) is integrally formed on the grip base (12) in an injection-moulding operation together with the grip covering (22).

18. Hand grip according to any of Claims 14 to 17, **characterized in that** the supporting structure (50) is connected directly to the grip covering (22) by way of through-passages (56) passing through the grip base (12).

19. Hand grip according to Claim 18, **characterized in that** the supporting structure (50) is formed by grip-covering material passing through the through-passages (56) in the grip base (12) during injection moulding of the grip covering (22).

20. Hand grip according to any of Claims 14 to 19, **characterized in that** the supporting structure (50) has a bearing surface (52) which can be positioned on a surface of the grip component (40) by virtue of elastic deformation.

21. Hand grip according to any of Claims 14 to 20, **characterized in that** the supporting structure (50) is formed from sub-regions (72, 74) which are separated from one another, at least in part, by recesses (64, 66).

22. Hand grip according to Claim 21, **characterized in that** the bearing surface (52) of the supporting structure (50) is divided up into surface sub-regions (76, 78) by the recesses (64, 66) in the supporting structure (50).

23. Hand grip according to Claim 21 or 22, **characterized in that** the recesses (64, 66) pass through the supporting structure (50) from the bearing surface (52) to the grip base (12).

24. Hand grip according to any of Claims 21 to 23, **characterized in that** the recesses (64, 66) are elongate and run approximately parallel to a longitudinal centre axis (70) of the grip base (12).

25. Hand grip according to any of Claims 21 to 24, **characterized in that** the bearing surface (52) rests only on sub-regions of the surface (68) of the grip component (40).

26. Hand grip according to any of Claims 14 to 25, **characterized in that** the supporting structure (50), overall, forms a holder (54) for the grip component (40).

27. Hand grip according to any of Claims 14 to 26, **characterized in that** the grip base (12) can be connected in a positive manner to the grip component (40) via a retaining element (80).

28. Hand grip according to any of Claims 14 to 26, **characterized in that** the grip base (12) can be connected to the grip component (40) via the supporting structure (50).

29. Hand grip according to Claim 28, **characterized in that** the supporting structure (50) can be connected to the grip component (40) by bonding.

30. Hand grip according to the preamble of Claim 1 or according to any of the preceding claims, **characterized in that** the hand grip (10) can be heated electrically.

31. Hand grip according to Claim 30, **characterized in that** the grip base (12) is provided with heating wires (94, 96) which form at least one heating loop (200).

32. Hand grip according to Claim 31, **characterized in that** the heating wires (94, 96) form at least one heating coil (92).

33. Hand grip according to Claim 30 or 31, **characterized in that** the heating wires (94, 96) forming the heating loop (200) are connected at the ends by a turn-back component (98).

34. Hand grip according to Claim 33, **characterized in that** the heating wires (94, 96) and the turn-back component (98) are formed by a one-piece wire.

35. Hand grip according to any of Claims 32 to 34, **characterized in that** the heating coil (92) can be fixed at the ends on the grip base (12).

36. Hand grip according to Claim 35, **characterized in that** the heating coil (92) can be fixed at the ends in a holder (119) on the grip base.

37. Hand grip according to Claim 35 or 36, **characterized in that** the heating coil (92) can be fixed at the ends on the grip base (12) by way of the turn-back component (98).

38. Hand grip according to either of Claims 35 and 36, **characterized in that** the heating coil (92) can be fixed at the ends on the grip base (12) via an insert part (120) which can be fixed on the grip base (12).

39. Hand grip according to Claim 38, **characterized in that** the insert part (120) has the holder (124) for the turn-back component (98) of the heating coil (92).

40. Hand grip according to Claim 38 or 39, **characterized in that** the insert part (120) can be fixed on the grip base (12) by form-fitting elements (126, 128) which are integrally formed on each of the insert part and the grip base.

41. Hand grip according to any of Claims 30 to 40, **characterized in that** the supply line (100) can be fixed in a fixing element (140) of the grip base (12).

42. Hand grip according to Claim 41, **characterized in that** the supply line (100) is retained in a force-fitting manner by the fixing element (140).

43. Hand grip according to Claim 42, **characterized in that** the supply line (100) is clamped by the fixing element (140).

44. Hand grip according to either of Claims 41 and 42, **characterized in that** the fixing element (140) is embedded in the grip covering (22).

45. Hand grip according to any of Claims 30 to 44, **characterized in that** a kink guard (160) for a supply line (100) is integrally formed on the grip covering (22).

46. Hand grip according to the preamble of Claim 1 or according to any of preceding Claims 30 to 45, **characterized in that** a plurality of heating loops (200) are provided in the hand grip (10).

47. Hand grip according to Claim 46, **characterized in that** the heating loops (200) have different heating capacities.

48. Hand grip according to Claim 46 or 47, **characterized in that** the plurality of heating loops (200) are arranged in parallel.

49. Hand grip according to any of Claims 46 to 48, **characterized in that** the plurality of heating loops (200) are assigned a switching device (210) which can activate one or more heating loops (200).

50. Hand grip according to any of Claims 46 to 49, **characterized in that** the plurality of heating loops (200) are formed from electrically insulated electric lines (94, 96, 98).

51. Hand grip according to Claim 50, **characterized in that** the electric lines (94, 96, 98) are enamel-insulated.

52. Hand grip according to any of Claims 46 to 51, **characterized in that** the plurality of heating loops (200) can be fixed at the ends in the same holder (119) provided on the grip base (12).

53. Hand grip according to any of Claims 46 to 52, **characterized in that** the plurality of heating loops (200) are disposed on the grip base (12) with heating wires (94, 96) running one beside the other.

54. Hand grip according to any of Claims 46 to 53, **characterized in that** the respective first and second heating wires (94, 96) of the heating loops (200) run in the same grooves (116, 118).

55. Hand grip according to any of Claims 46 to 54, **characterized in that** the respective first and second heating wires (94, 96) of the plurality of heating loops (200) run between the same protrusions (106).

## Revendications

1. Poignée pour véhicules dirigées par un guidon, comprenant une gaine de préhension (22) en matériau pour gaine de préhension et un espace de réception (36) s'étendant par son extension longitudinale (38) depuis une ouverture d'insertion (75) dans une direction d'insertion (67) pour une pièce de poignée (40) du guidon (42), lequel comporte au moins un segment de paroi qui comprend au moins une surface d'appui avec des surfaces partielles (76, 78) adaptées à une surface extérieure (68) de la pièce de poignée (40), **caractérisée en ce que** le segment de paroi comporte au moins un évidement (64, 66) comme réservoir de colle et ménagé entre les surfaces partielles et s'étendant sensiblement parallèlement à la direction d'insertion (67), et **en ce que** l'évidement (64, 66) présente une largeur (B) dans la direction périphérique de la pièce de poignée (40, qui diminue progressivement dans la direction d'insertion (67).

2. Poignée selon la revendication 1, **caractérisée en ce que** l'évidement (64, 66) présente radialement à la pièce de poignée (40) une profondeur qui diminue progressivement dans la direction d'insertion (67).

3. Poignée selon l'une des revendications précédentes, **caractérisée en ce que** la transition de l'évidement (64, 66) vers la surface partielle (76, 78) qui lui est adjacente est sans étagement.

4. Poignée selon l'une des revendications précédentes, **caractérisée en ce que** l'évidement (64, 66) est pourvu d'une paroi latérale (83, 84) s'étendant suivant un angle aigu (a) vers la surface partielle (76, 78) de la surface d'appui (52) qui lui est adjacente.

5. Poignée selon la revendication 4, **caractérisée en ce que** l'évidement (64, 66) est pourvu sur ses deux côtés de la paroi latérale (83, 84) s'étendant ainsi.

6. Poignée selon l'une des revendications précédentes, **caractérisée en ce que** l'évidement (64, 66) s'étend sensiblement sur toute l'extension longitudinale de l'espace de réception.

7. Poignée selon le préambule de la revendication 1 ou selon l'une des revendications précédentes, **caractérisée en ce qu'**au moins un segment de paroi de l'espace de réception (36) est pourvu d'une surface d'appui (52) avec des surfaces partielles (76, 78) adaptées à une surface extérieure (68) de la pièce de poignée (40) et d'un élément écarteur se dressant au-dessus de la surface d'appui (52), lequel crée un interstice (91) pour la réception d'une couche de colle (90) entre les surfaces partielles (76, 78) et une surface extérieure (68) de la pièce de poignée (40).

8. Poignée selon la revendication 7, **caractérisée en ce que** l'élément écarteur (85) est réalisé sous forme de boudin s'étendant dans la direction d'insertion (67).

9. Poignée selon la revendication 7 ou 8, **caractérisée en ce que** l'élément écarteur (85) s'étend d'un seul tenant de l'ouverture d'insertion (75) à une extrémité de l'espace de réception (36).

10. Poignée selon l'une des revendications 7 à 9, **caractérisée en ce que** l'élément écarteur (85) s'étend sensiblement sur toute l'extension longitudinale (38) de l'espace de réception (36).

11. Poignée selon l'une des revendications précédentes, **caractérisée en ce qu'**une surface partielle (76, 78) de la surface d'appui (52) est disposée entre l'élément écarteur (85) et l'évidement (64, 66).

12. Poignée selon la revendication 11, **caractérisée en ce qu'**un élément écarteur (85) est prévu des deux côtés de l'évidement (64, 66) correspondant.

13. Poignée selon la revendication 11 ou 12, **caractérisée en ce que** des surfaces partielles (76, 78) de la surface d'appui (52) sont prévues entre l'évidement (64, 66) et les éléments écarteurs (85) situés des deux côtés de celui-ci.

14. Poignée selon le préambule de la revendication 1 ou selon l'une des revendications précédentes, **caractérisée en ce que** la poignée (10) comporte une base de poignée (12) et la gaine de préhension (22) recouvrant la base de poignée (12), et **en ce qu'**une structure d'appui (50) en matériau déformable est formée sur la base de poignée (12) dans la région de l'espace de réception (36), au moyen de laquelle la base de poignée (12) peut s'appuyer contre la pièce de poignée (40) du guidon (42).

15. Poignée selon la revendication 14 **caractérisée en ce que** la structure d'appui (50) est formée sur la base de poignée (12) par moulage par injection.

16. Poignée selon la revendication 14 ou 15, **caractérisée en ce que** le matériau déformable correspond à un matériau pour gaine de préhension.

17. Poignée selon la revendication 16, **caractérisée en ce que** la gaine de préhension (22) est formée par enrobage de la base de poignée (12) avec le matériau pour gaine de préhension sur la base de poignée (12), et **en ce que** la structure d'appui (50) est formée en un seul processus d'injection avec la gaine de préhension (22) sur la base de poignée (12).

18. Poignée selon l'une des revendications 14 à 17, **caractérisée en ce que** la structure d'appui (50) est directement raccordée à la gaine de préhension (22) par des perforations (56) traversant la base de poignée (12).

19. Poignée selon la revendication 18, **caractérisée en ce que** la structure d'appui (50) est formée par le matériau pour gaine de préhension traversant la base de poignée (12) par les perforations (56) lors de l'injection de la gaine de préhension (22).

20. Poignée selon l'une des revendications 14 à 19, **caractérisée en ce que** la structure d'appui (50) présente une surface d'appui (52) applicable en nappe sur une surface de la pièce de poignée (40) en raison de sa déformation élastique.

21. Poignée selon l'une des revendications 14 à 20, **caractérisée en ce que** la structure d'appui (50) est formée de zones partielles (72, 74) qui sont au moins partiellement séparées entre elles par des évidements (64, 66).

22. Poignée selon la revendication 21, **caractérisée en ce que** la surface d'appui (52) de la structure d'appui (50) est divisée en surfaces partielles (76, 78) par les évidements (64, 66) dans la structure d'appui (50).

23. Poignée selon la revendication 21 ou 22, **caractérisée en ce que** les évidements (64, 66) traversent la structure d'appui (50) de la surface d'appui (52) jusqu'à la base de poignée (12).

24. Poignée selon l'une des revendications 21 à 23, **caractérisée en ce que** les évidements (64, 66) s'étendent longitudinalement et sensiblement parallèlement à un axe longitudinal médian (70) de la base de poignée (12).

25. Poignée selon l'une des revendications 21 à 24, **caractérisée en ce que** la surface d'appui (52) ne repose que sur des zones de surfaces partielles de la surface (68) de la pièce de poignée (40).

26. Poignée selon l'une des revendications 14 à 25, **caractérisée en ce que** la structure d'appui (50) forme globalement une réception (54) pour la pièce de poignée (40).

27. Poignée selon l'une des revendications 14 à 26, **caractérisée en ce que** la base de poignée (12) peut être raccordée par combinaison de formes à la pièce de poignée (40) au moyen d'un élément de maintien (80).

28. Poignée selon l'une des revendications 14 à 26, **caractérisée en ce que** la base de poignée (12) peut être raccordée à la pièce de poignée (40) au moyen de la structure d'appui (50).

29. Poignée selon la revendication 28, **caractérisée en ce que** la structure d'appui (50) peut être raccordée par liaison de matière à la pièce de poignée (40).

30. Poignée selon le préambule de la revendication 1 ou selon l'une des revendications précédentes, **caractérisée en ce que** la poignée (10) peut être chauffée électriquement.

31. Poignée selon la revendication 30, **caractérisée en ce que** la base de poignée (12) est pourvue de résistances chauffantes (94, 96) formant au moins une boucle chauffante (200).

32. Poignée selon la revendication 31, **caractérisée en ce que** les résistances chauffantes (94, 96) forment au moins un enroulement chauffant (92).

33. Poignée selon la revendication 30 ou 31, **caractérisée en ce que** les résistances chauffantes (94, 96) formant la boucle chauffante (200) sont reliées par une pièce de renvoi (98) à leur extrémité.

34. Poignée selon la revendication 33, **caractérisée en ce que** les résistances chauffantes (94, 96) et la pièce de renvoi (98) sont formées par un fil métallique d'un seul tenant.

35. Poignée selon l'une des revendications 32 à 34, **caractérisée en ce que** l'enroulement chauffant (92) peut être fixé côté extrémité sur la base de poignée (12).

36. Poignée selon la revendication 35, **caractérisée en ce que** l'enroulement chauffant (92) peut être fixé côté extrémité dans un logement (119) sur la base de poignée.

37. Poignée selon la revendication 35 ou 36, **caractérisée en ce que** l'enroulement chauffant (92) peut être fixé côté extrémité avec la pièce de renvoi (98) sur la base de poignée (12).

38. Poignée selon la revendication 35 ou 36, **caractérisée en ce que** l'enroulement chauffant (92) peut être fixé côté extrémité sur la base de poignée (12) par un insert (120) fixable sur la base de poignée (12).

39. Poignée selon la revendication 38, **caractérisée en ce que** l'insert (120) comprend le logement (124) pour la pièce de renvoi (98) de l'enroulement chauffant (92).

40. Poignée selon la revendication 38 ou 39, **caractérisée en ce que** l'insert (120) peut être fixé sur la base de poignée (12) par des éléments d'accouplement mécanique (126, 128) formées sur l'insert et sur la base de poignée.

41. Poignée selon l'une des revendications 30 à 40, **caractérisée en ce que** le câble d'alimentation (100) peut être fixé dans un élément de fixation (140) de la base de poignée (12).

42. Poignée selon la revendication 41, **caractérisée en ce que** le câble d'alimentation (100) est maintenu par adhérence par l'élément de fixation (140).

43. Poignée selon la revendication 42, **caractérisée en ce que** le câble d'alimentation (100) est serré par l'élément de fixation (140).

44. Poignéeselon la revendication 41 ou 42, **caractérisée en ce que** l'élément de fixation (140) est incorporé à la gaine de préhension (22).

45. Poignée selon l'une des revendications 30 à 44, **caractérisée en ce qu'**une protection antinouage (160) est formée sur la gaine de préhension (22) pour un câble d'alimentation (100).

46. Poignée selon le préambule de la revendication 1 ou selon l'une des revendications 30 à 45, **caractérisée en ce que** plusieurs boucles chauffantes (200) sont prévues dans la poignée (10).

47. Poignée selon la revendication 46, **caractérisée en ce que** les boucles chauffantes (200) présentent des puissances de chauffe différentes.

48. Poignée selon la revendication 46 ou 47, **caractérisée en ce que** les boucles chauffantes (200) sont disposées en montage parallèle.

49. Poignée selon l'une des revendications 46 à 48, **caractérisée en ce qu'**un dispositif de commutation (210) est associé aux boucles chauffantes (200), permettant de commuter une boucle chauffante (200) ou plusieurs boucles chauffantes.

50. Poignée selon l'une des revendications 46 à 49, **caractérisée en ce que** les boucles chauffantes (200) sont formées par des fils électriques (94, 96, 98) isolés électriquement.

51. Poignée selon la revendication 50, **caractérisée en ce que** les fils électriques (94, 96, 98) sont isolés par vernis.

52. Poignée selon l'une des revendications 46 à 51, **caractérisée en ce que** les boucles chauffantes (200) peuvent être fixées côté extrémité dans le même logement (119) prévu sur la base de poignée (12).

53. Poignée selon l'une des revendications 46 à 52, **caractérisée en ce que** les boucles chauffantes (200) sont disposées avec des résistances chauffantes (94, 96) s'étendant côte à côte sur la base de poignée (12).

54. Poignée selon l'une des revendications 46 à 53, **caractérisée en ce que** les premières et les deuxièmes résistances chauffantes (94, 96) des différentes boucles chauffantes (200) s'étendent dans les mêmes gorges (116, 118).

55. Poignée selon l'une des revendications 46 à 54, **caractérisée en ce que** les premières et les deuxièmes résistances chauffantes (94, 96) des boucles chauffantes (200) s'étendent entre les mêmes protubérances (106).
